# EUROPEAN PATENT APPLICATION

(11) **EP 3 626 772 A1**
(43) Date of publication of application: **25.03.2020**
(21) Application number: 18195485.0
(22) Date of filing: 19.09.2018
(51) Int. Cl.: C08K 5/3492

(54) **USE OF A MELAMINE BASED COMPOUND AND A HALS COMPOUND AS HEAT STABILIZER IN POLYMERS**

(71) Applicant: Borealis AG, 1220 Wien (AT)
(72) Inventor: WANG, Jingbo, 4021 Linz (AT); PUCHINGER, Helmut, 4021 Linz (AT); DICKE, René, 4021 Linz (AT); NEUHOFER, Sandra, 4020 Linz (AT); PAULIK, Christian, 4030 Linz (AT)
(74) Representative: Maikowski & Ninnemann Patentanwälte Partnerschaft mbB

(57) **Abstract**

The present invention relates to the use of a composition comprising a) at least one Melamine based Mannich compound of the formula (I) and/or their dimers or trimers and/or one or more precondensate therefrom of the formula (II) 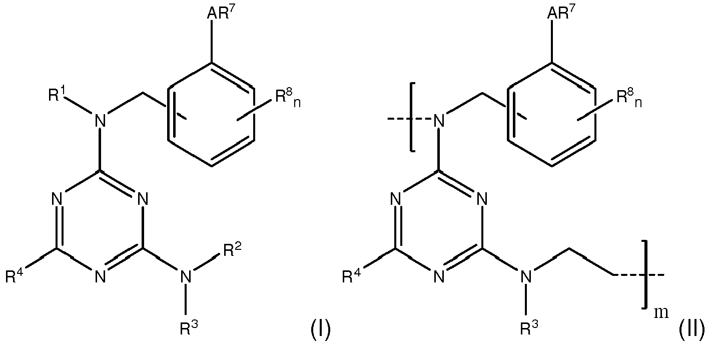 and b) at least one hindered amine light stabilizer (HALS) as heat stabilizer, in particular long term heat stabilizer in thermoplastic polymer, preferably in polyolefins.

## Description

The present invention relates to the use of a composition comprising Melamine based Mannich compounds and a HALS compound for increasing the resistance of thermoplastic polymers against degradation caused by heat, to a polymer composition with increased heat resistance to heat and to the use of such polymer composition for producing articles.

### Description

It is known that the mechanical, chemical and/or aesthetic properties of polymeric materials, worsen under the influence of energy such as heat and/or sunlight and other sources of ultraviolet (UV) radiation, and/or oxygen. This results in an irreversible deterioration of the chemical and/or physical properties of the non-living organic materials, e.g. results for polymeric materials i.a. in a loss of strength, stiffness and flexibility, discoloration and scratching and loss of gloss.

Such aging processes are normally based on oxidation reactions which are caused by heat, light, mechanical stress, catalysis or reactions with impurities. The aging of polymeric materials can occur during their production, during processing into shaped parts by moulding, extrusion, etc. and/or during use of the shaped parts.

It is well-known in the art that stabilizers, such as antioxidants, light stabilizers and heat stabilizers can prevent or at least reduce these effects by adding them to the polymers to protect them during processing and to achieve the desired end-use properties.

In the current polyolefines industry different additives are used in order to fulfil different requirements, for example, steric hindered phenolic antioxidants are used for long term and short term thermal stability, HALS is used as UV stabilizer to stabilize the compounds for outdoor application, which is general attacked by the UV light.

Hindered amine light stabilizers (HALS) are chemical compounds containing an amine functional group that are used as stabilizers in plastics and polymers. HALS do not absorb UV radiation, but act to inhibit degradation of the polymer by continuously and cyclically removing free radicals that are produced by photo-oxidation of the polymer. Broadly, HALS react with the initial polymer peroxy radical (ROO•) and alkyl polymer radicals (R•) formed by the reaction of the polymer and oxygen, preventing further radical oxidation. By these reactions HALS are oxidised to their corresponding aminoxyl radicals (R₂NO• c.f. TEMPO), however they are able to return to their initial amine form via a series of additional radical reactions. HALS's high efficiency and longevity are due to this cyclic process wherein the HALS are regenerated rather than consumed during the stabilization process.

HALS are capable of preventing the oxidation of aldehydes, but do not influence the oxidation rate of polymers (hydrocarbons). Thus, HALS are also known as good heat stabilizers at low temperatures (P. Gijsman, Polymer Degradation and Stability, 1994, 43: 171-176).

The combination of thermal and light effect can be very difficult for the polymer alone and, very limited additives can provide the all necessary functions, therefore combination of different additives with different functions are employed. However, due to complicated nature of different additives and processing, not all the time the synergism is seen but an antagonistic effect is showing.

A typical example is steric hindered phenolic antioxidants and HALS. The combination of a phenolic antioxidant and a HALS compound provides poor long term thermal stability values compared to the pure phenolic antioxidant. The drawback of the antagonistic effect is that 1) it limits the freedom of recipe development in that one has to consider the potential interaction all the time and not all of the time the effect is predictable; and 2) overdosing of each additive since both of them are required for different functions and certain minimum performance is required by the market. Overdosing does not only result in a cost problem but also in other problems, like migration, NIAS, etc.

It was therefore an object of the invention to provide compounds that can overcome the above described problem of an antagonistic effect and can be used a long term heat or thermal stabilizer in thermoplastic polymers, in particular polyolefins.

This object is solved by the uses of a composition of Melamine based Mannich compounds and HALS compound as defined in claim 1.

Accordingly, the present invention relates to the use of a composition comprising
a) at least one Melamine based Mannich compound of the formula (I) and/or their dimers or trimers and/or one or more precondensate therefrom of the formula (II) 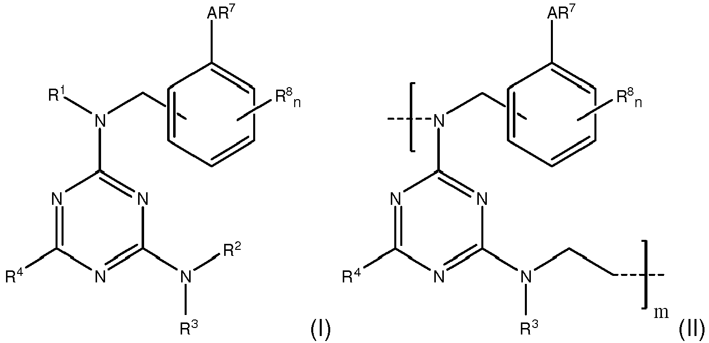 whereby
   - **A** is O, N or S;
   - **R⁴** is hydrogen, or Q¹, or a group **R⁵**-N-**R⁶** bonded with its central nitrogen atom to the triazine ring of structure (I) or (II);
   - **R¹, R², R³, R⁵** and **R⁶** are hydrogen, or Q¹ or group of the formula (III) 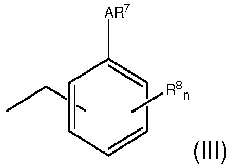
   - **R⁷** is hydrogen, or Q¹, whereby in case of A being O or S R⁷ is present once, and in case of A being N R⁷ is present twice;
   - **R⁸** is selected independently from each other and can be Q¹, or is selected from a group consisting of substituted or non-substituted hydroxy, substituted or non-substituted amino, halogen, or can be a group with the structure of (IV), whereby **R^{8'}** has the meaning of **R⁸** 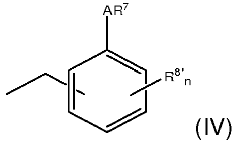
   - **n** is 0 to 4,
   - Q¹ is selected from a group consisting of substituted and non-substituted, linear or branched C₁-C₅₀-alkyl, substituted and non-substituted, linear or branched C₂-C₅₀-alkenyl, substituted and non-substituted, linear or branched C₂-C₅₀-alkinyl, substituted and non-substituted C₃-C₁₀-cycloalkyl, substituted and non-substituted C₅-C₇-cycloalkenyl, substituted and non-substituted C₆-C₂₀-aryl, which in each case can be
   interrupted by one or more atoms or groups selected from oxygen atoms, substituted or mono-substituted nitrogen atoms, double bonds, siloxan groups and/or by one or more groups of the type -C(O)O-, -OC(O)-, -C(O)-, -C(O)NH-, -NHC(O)O-,-OC(O)NH-, -NHC(O)NH- and/or -OC(O)O-, whereby in case of R⁴ the atoms and groups selected from oxygen atoms, -OC(O)-, -C(O)-, -NHC(O)O-, -NHC(O)NH- or -OC(O)O- can be directly connected to the triazine ring and in case of R⁷ the atoms and groups selected from -C(O)-, C(O)O- or -C(O)NH- can be directly connected to A and in case of R⁸ the groups selected from -OC(O)-, -C(O)-, -NHC(O)O-, -NHC(O)NH-, -C(O)O-, -C(O)NH- or -OC(O)O- can be directly connected to the aromatic ring,
   - **m** is 2 to 20, and
b) at least one hindered amine light stabilizer (HALS),
   as heat stabilizer, in particular long term heat stabilizer in thermoplastic polymer, preferably in polyolefins.

Thus, a composition is provided that can be used as a long term heat stabilizer in thermoplastic polymers that surprisingly does not show any antagonistic effect. Due to some structural similarity of the Melamine based compound of the invention and the conventionally used phenolic antioxidants that was not predicted by a person skilled in the art and thus surprising.

In one embodiment the melamine based Mannich compound is of formula (I) and (II), wherein
- **A** is O or N,
- **R⁴** is Q¹ being selected from substituted or non-substituted, linear or branched C₁-C₁₈-alkyl or substituted or non-substituted C₆-C₁₀-aryl, or a group **R⁵**-N-**R⁶** bonded with its central nitrogen atom to the triazine ring of structure (I) or (II),
- **R¹, R², R³, R⁵** and **R⁶** are selected from hydrogen, substituted or non-substituted, linear or branched C₁-C₁₈-alkyl, substituted or non-substituted C₃-C₇-cycloalkyl and substituted or non-substituted, linear or branched C₂-C₁₂-alkenyl or group of the formula (III) 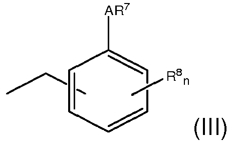
- **R⁷** is selected from hydrogen or C₁-C₁₂-alkyl which can be interrupted by one or more oxygen atoms, substituted or mono-substituted nitrogen atoms, and/or by one or more groups of the type -C(O)O-, -OC(O)- and -C(O)-, whereby the group -C(O)- can also be directly connected to A,
- **n** is 1 or 2, whereby the position of **n** is *ortho* to AR⁷,
- **R⁸** is from a group comprising -OH, -OCH₃, -OC₂H₅, -NH₂, substituted or non-substituted, linear or branched C₁-C₁₂-Alkyl, substituted and non-substituted C₃-C₇-cycloalkyl and substituted and non-substituted, linear or branched C₂-C₁₂-alkenyl, substituted and non-substituted C₆-C₁₂ Aryl,
- **m** is 2 to 10.

It is to be pointed out that the aromatic structure -C₆H₄R⁸AR⁷ of the formula (III) can be connected via the methylene group to an amino group of the triazine ring in one of the general formulae (I) or (II) in any of the three possible positions to the AH-group on the aryl ring (i.e. ortho, meta, para), whereby the *ortho-* and *para*-positions, e.g. *ortho-* and *para*-isomers, in particular *ortho*-isomers are preferred.

In a further embodiment the melamine based Mannich compound of the formula (I) consists of one of the following structures: 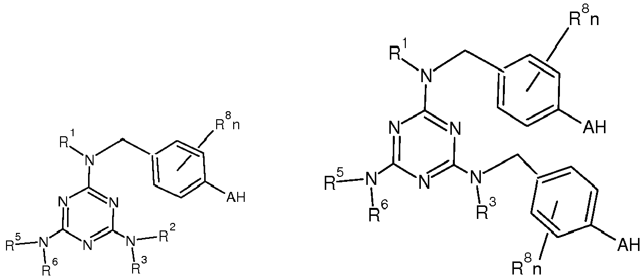 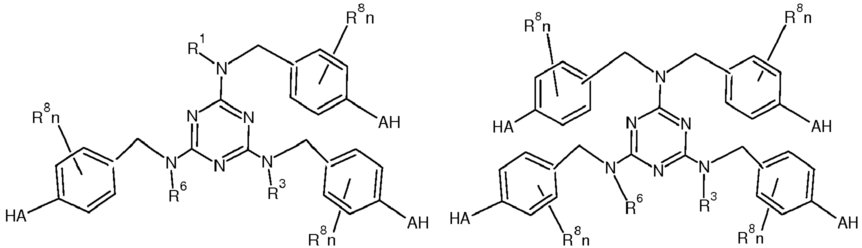 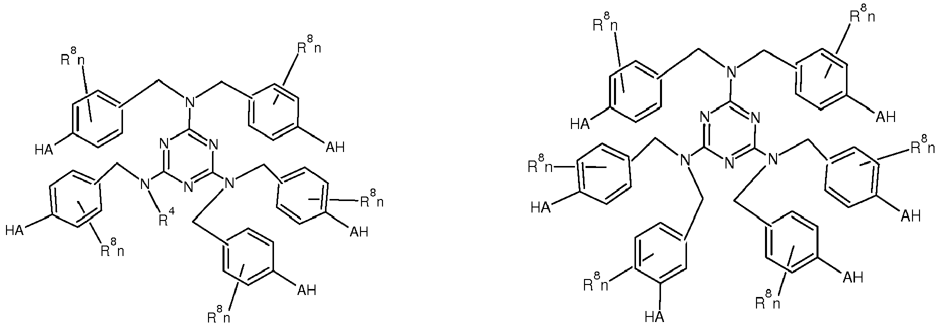 wherein R¹, R², R³, R⁵, R⁶, R⁸ have the above meaning and A is O.

In still a further embodiment the moieties R¹, R², R³, R⁵ and R⁶ can be selected from a group comprising H, substituted and non-substituted C₁-C₁₂-alkyl, substituted and non-substituted C₃-C₇-Cycloalkyl and substituted and non-substituted C₂-C₁₂-alkenyl, preferably H, methyl, ethyl, isopropyl or butyl.

It is still further possible that the moiety R⁸ is selected from a group comprising substituted or non-substituted C₁-C₁₂-Alkyl, in particular methyl, ethyl, n-propyl, iso-propyl, n-butyl, tert-butyl, and n = 1 or 2, in particular 2.

The term "substituted" in connection to alkyl, alkenyl, alkinyl, cycloalkenyl and aryl relates to the substitution of one or more atoms, usually H-atoms, by one or more of the following substituents: halogen, hydroxy, protected hydroxy, oxo, protected oxo, C₃-C₇-cycloalkyl, phenyl, naphtyl, amino, protected amino, primary or secondary amino, heterocyclic ring, imidazolyl, indolyl, pyrrolidinyl, C₁-C₁₂-alkoxy, C₁-C₁₂-acyl, C₁-C₁₂-acyloxy, nitro, carboxy, carbamoyl, carboxamid, N-(C₁-C₁₂-alkyl)carboxamid, N,N-Di(C₁-C₁₂-alkyl)carboxamid, cyano, methylsulfonylamino, thiol, C₁-C₁₀-alkylthio und C₁-C₁₀-alkylsulfonyl. The substituted groups can be once or twice substituted with same or different substituents.

The term "substituted" in connection to mercapto, hydroxy and amino relates to the substitution of at least one H atom by one or in case of amino one or two of one of the substituents mentioned above, in particular substituted and non-substituted, linear or branched C₁-C₁₂-alkyl, substituted and non-substituted C₃-C₇-Cycloalkyl and substituted and non-substituted, linear or branched C₂-C₁₂-alkenyl. Hence, the mercapto and hydroxy group can be present as a mercaptoether or an ether group, respectively. Amino group can be present as a primary or secondary amine.

The term "substituted" in connection to a carbonyl group relates to -COR groups whereby R can have the meaning of one of the above substituents, in particular H, substituted and non-substituted, linear or branched C₁-C₁₂-alkyl, substituted and non-substituted C₃-C₇-Cycloalkyl and substituted and non-substituted, linear or branched C₂-C₁₂-alkenyl.

The term "alkinyl" as used herein relates to a moiety of the formulae R-C≡C-, in particular to a linear or branched C₂-C₅₀-alkinyl. Examples for C₂-C₅₀-alkinyle comprise ethinyl, propinyl, 2-butinyl, 2-pentinyl, 3-pentinyl, 2-hexinyl, 3-hexinyl, 4-hexinyl, 2-heptinyl, 3-heptinyl, 4-heptinyl, 5-heptinyl, octinyl, noninyl, decinyl, undecinyl, dodecinyl, as well as di- and tri-ines of straight or branched alkyl chains.

The term "alkyl" relates to moieties like methyl, ethyl, n-propyl, isopropyl, n-butyl, isobutyl, s-butyl, t-butyl, amyl, t-amyl, hexyl, heptyl, octyl, nonyl, decyl, undecyl, dodecyl, and alike. Preferred alkyl groups are methyl, ethyl, isobutyl, s-butyl, t-butyl und isopropyl.

The term "oxo" relates to a carbon atom, which is connected with an oxygen atom via a double bond whereby a keto or an aldehyde group is formed. The term "protected oxo" relates to a carbon atom, which is substituted by two alkoxy groups or is connected twice with a substituted diol forming a non-cyclic or cyclic ketal group.

The term "alkoxy" relates to moieties like methoxy, ethoxy, n-propoxy, isopropoxy, n-butoxy, t-butoxy and alike. A preferred alkoxy group is methoxy.

The term "C₃-C₇-cycloalkyl" comprises groups like cyclopropyl, cyclobutyl, cyclopentyl, cyclohexyl und cycloheptyl. The term "C₅-C₇-Cycloalkenyl" relates to a 1,2 or 3-cyclopentenyl ring, a 1,2,3 or 4-cyclohexenyl ring or a 1,2,3,4 or 5-cycloheptenylring.

In an even more specific embodiment the melamine based Mannich compounds of general formula (I) and (II) are selected from a group consisting of: 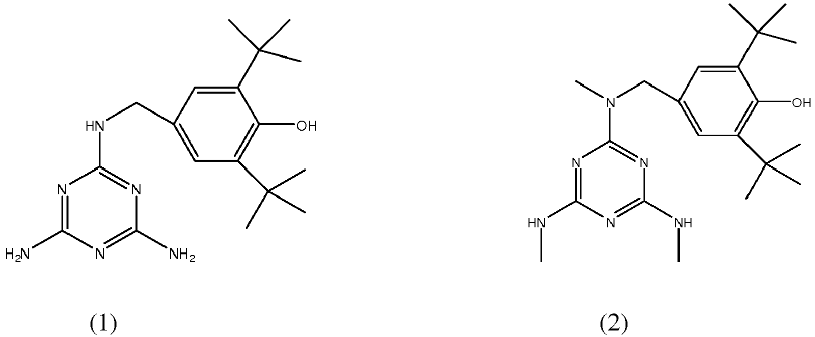 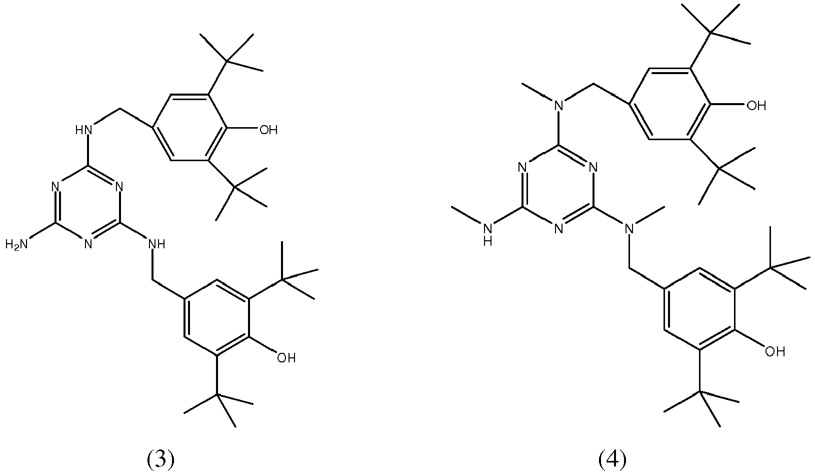 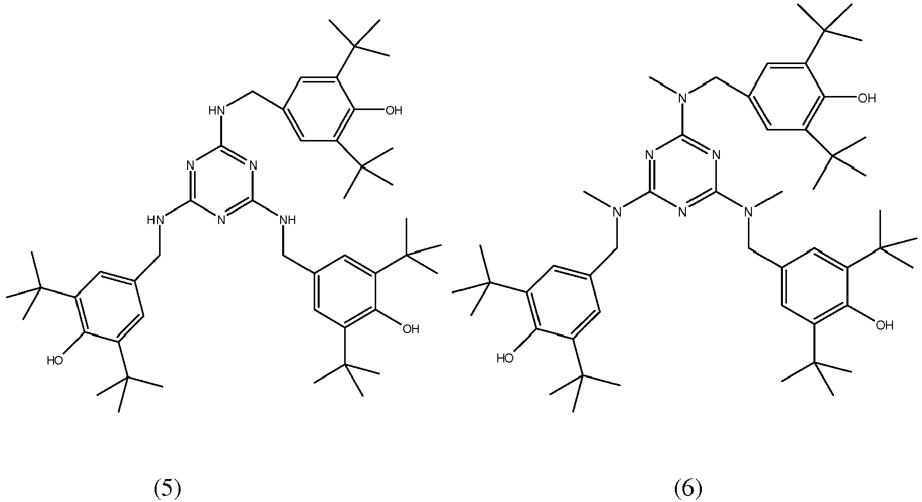 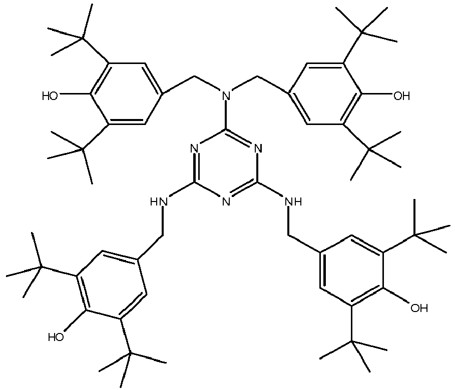 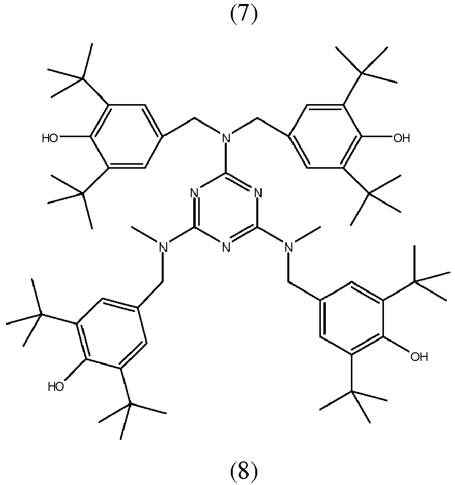 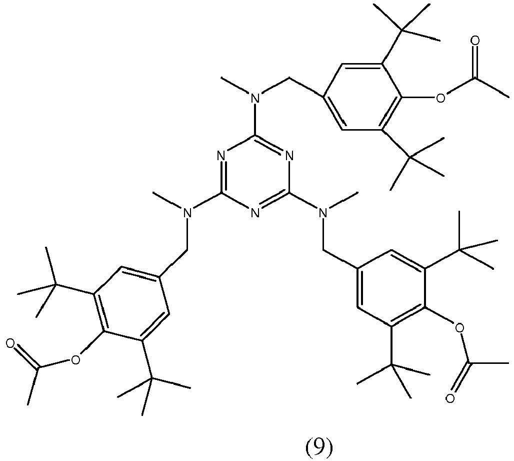 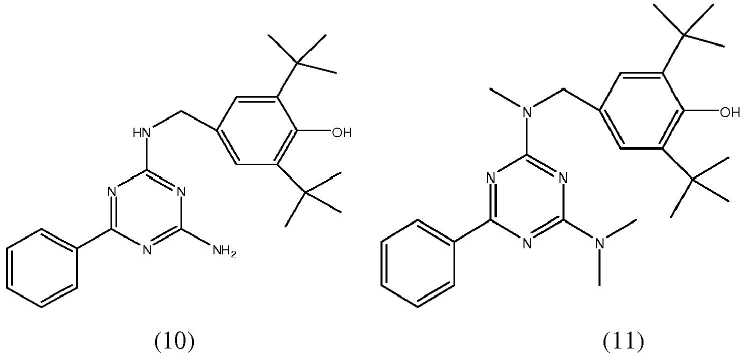 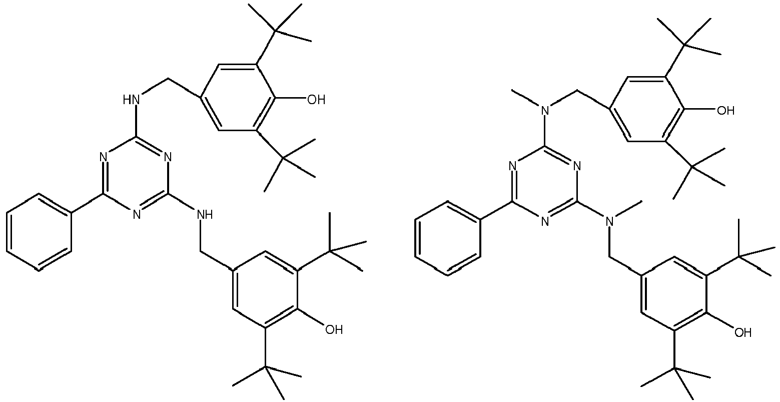 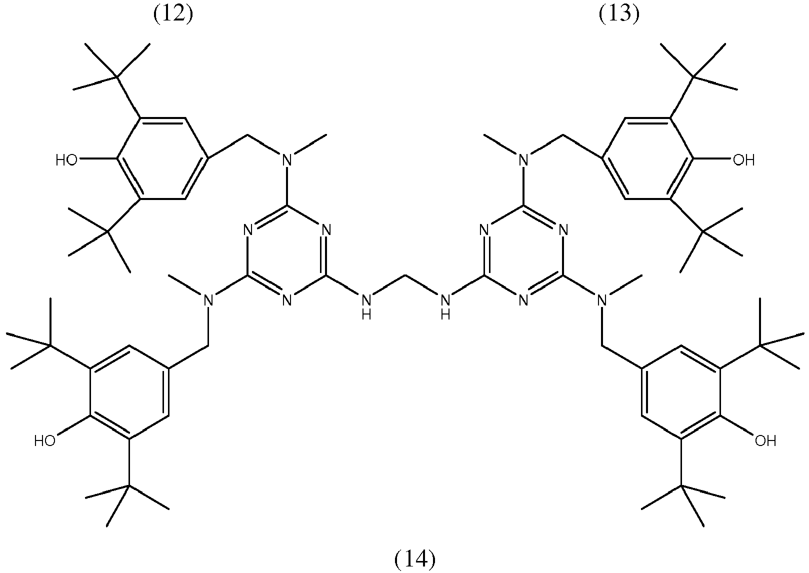 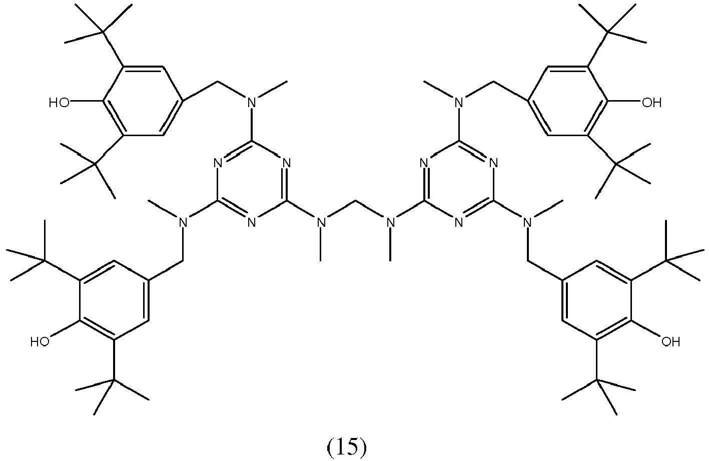 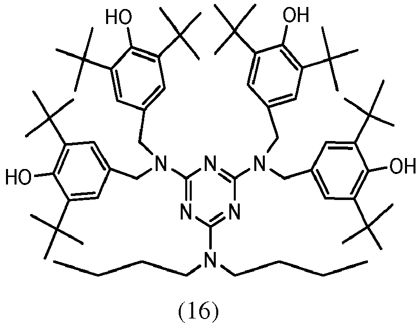 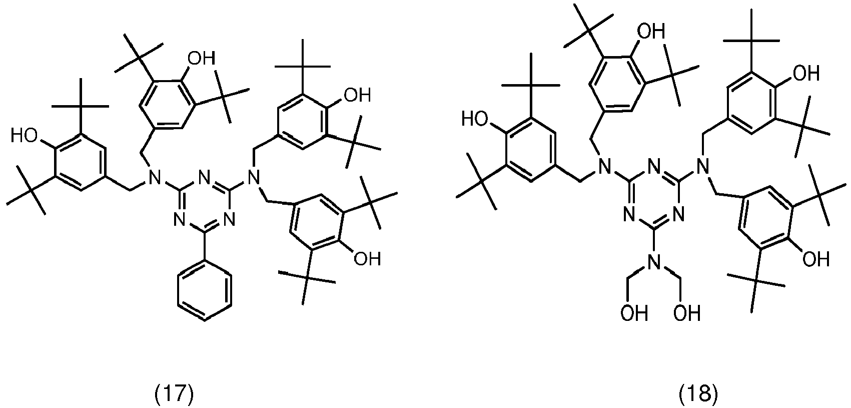 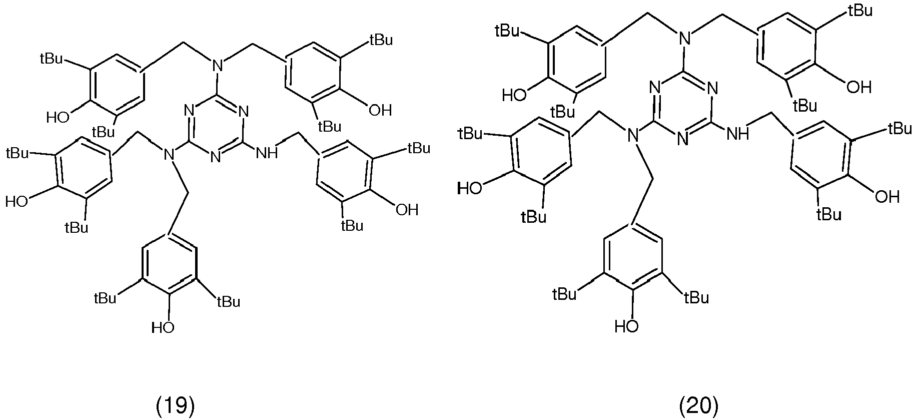 or mixtures thereof.

In yet another embodiment the melamine based Mannich compound according to formula (I) is selected from a group consisting of: 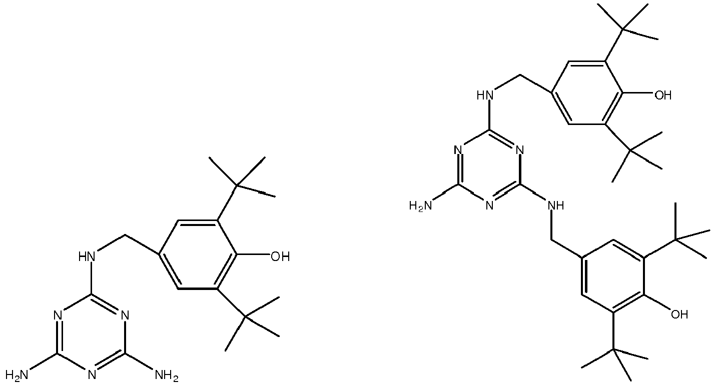 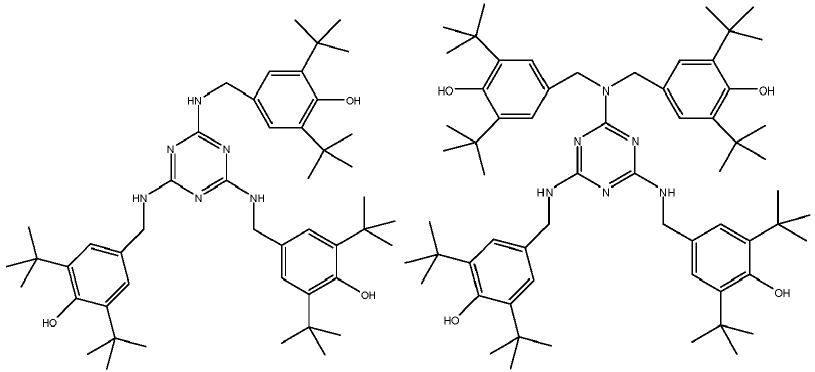 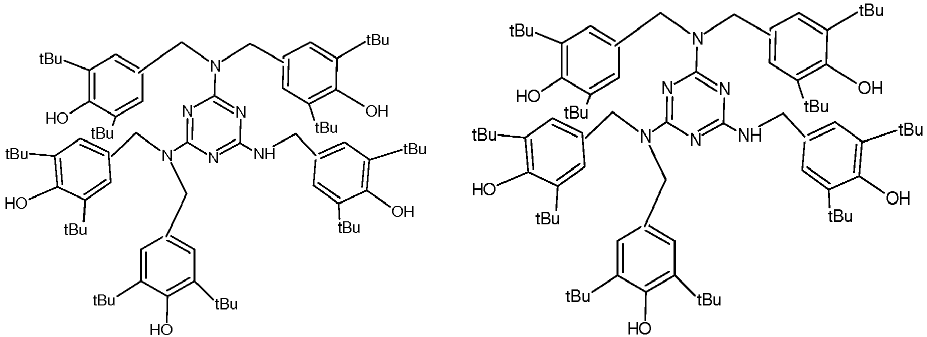 or a mixture thereof.

The preparation of the melamine based Mannich compounds suitable for use according to the invention, is described in WO 2011/061220 A1.

The synthesis process comprises
a) the reaction of at least one amino-triazine derivate of formula (V) with formaldehyde under basic conditions to form at least one compound of formula (VI) 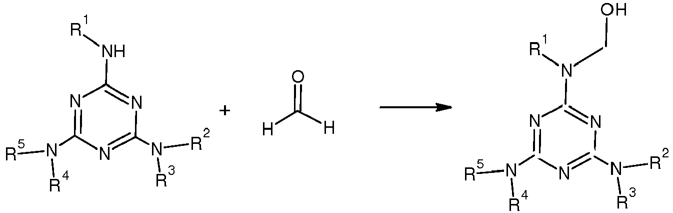 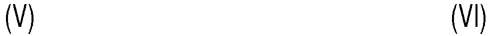
b) reacting the at least one compound of formula (VI) in the presence of a catalyst to form at least one Mannich-base of formula (VII) 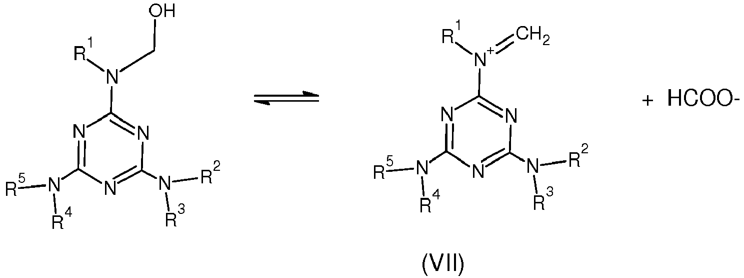
c) reacting the at least one Mannich-base of formula (VII) with at least one substituted or non-substituted aromatic compound of the general formulae (VIII) to form at least one of the compounds according to the general formula (I) 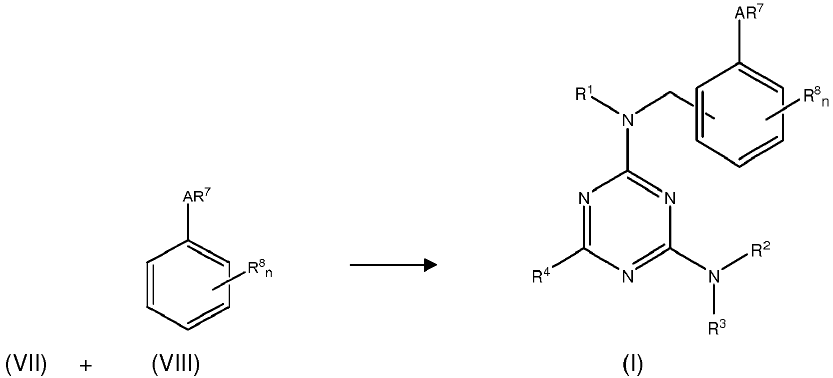
d) and working up the reaction mixture,
whereby the moieties R¹ to R⁸, n and A have the above meanings.

In this process the formation of Iminium-ion as the Mannich base in step b) is the rate-determining step. The electrophilic Iminium-ion is formed in situ by protonation of the OH-containing compound obtained in step a) followed by dehydration. In general, the Iminium-ion is stabilised in a protic polar solvent, whereas in an unpolar solvent the stability of the Iminium-ion is reduced and thus reacts faster.

is to be understood that the process steps can be carried out in form of a one-pot synthesis or independently from each other. This means that for instance the OH-containing compounds of step a) can be are separately synthesized, isolated and stored before further usage.

The preferred molar ratio of amino-triazine derivative to aromatic compound of formula (VIII) in the process is from 1:1 to 1:6, preferably from 1:1 to 1:4, in particular preferred from 1:1 to 1:3.

Step a) of the process is carried out at a pH between 8 and 12, preferably between 9 and 11, in the presence of an inorganic or organic base, preferably K₂CO₃, Na₂CO₃, Ca(OH)₂, NaOH and/or KOH.

Steps b) and c) are preferably carried out at a pH between 1 and 6, preferably 2 and 5, most preferably between 2 and 4.

The catalyst used in steps b) or c) is preferably selected from a group comprising sulphonic acid, sulphuric acid, trifluoracetic acid (TFAA), 4-toluenesulphonic acid (pTSA), monochloracetic acid (MCAA), glacial acetic acid, hydrochloric acid and formic acid. The molar excess of the catalyst varies dependent of the applied acid and can be between 1: 10, preferably 1: 5, in particular preferably 1: 3, in respect to the Mannich base of formula (VII). However, the reaction can also be carried out using catalytic amounts of acid.

The process enables the formation of mono-, twice-, three- and four- times substituted co-condensation amino-triazine products. Also dimers and trimers are formed.

The amino-triazine based co-condensation products can be reacted further with formaldehyde, giving rise to precondensates of formula (II). The precondensate can be of course also available as mixtures of different precondensates.

The composition used according to the invention comprises at least one HALS compound. As mentioned above the HALS compounds contain at least one amine functional group, in particular in form of a piperidine ring, in particular a substituted piperidine ring. The piperidine ring may be substituted by four linear or branched C1-C5 alkyl, preferably by four linear or branched C1-C3 alkyl. The alkyl substituents are preferably in ortho position to the N-atom of the piperidine ring.

In one embodiment the at least one HALS compound comprises one, preferably two (2,2,6,6)-tetramethylpiperidine -4-yl moieties.

The at least one HALS compound may comprise in para-position to the N-atom a group of the type -C(O)O-, -C(O)-, -NHC(O)O-, -NHC(O)NH- or -OC(O)O-, which in each case is connected to an alkyl, alkenyl or cycloalkyl moiety.

The at least one HALS is preferably selected from a group consisting of
1) 4-hydroxy-2,2,6,6-tetramethylpiperidine
2) 1-allyl-4-hydroxy-2,2,6,6-tetramethylpiperidine
3) 1-benzyl-4-hydroxy-2,2,6,6-tetramethylpiperidine
4) 1-(4-tert-butyl-2-butenyl)-4-hydroxy-2,2,6,6-tetramethylpiperidine
5) 4-stearoyloxy-2,2,6,6-tetramethylpiperidine
6) 1-ethyl-4-salicyloyloxy-2,2,6,6-tetramethylpiperidine
7) 4-methacryloyloxy-1,2,2,6,6-pentamethylpiperidine
8) 1,2,2,6,6-pentamethylpiperidin-4-yl □-(3,5-di-tert-butyl-4-hydroxyphenyl)propionate
9) di(1-benzyl-2,2,6,6-tetramethylpiperidin-4-yl) maleate
10) di(2,2,6,6-tetramethylpiperidin-4-yl) succinate
11) di(2,2,6,6-tetramethylpiperidin-4-yl) glutarate
12) di(2,2,6,6-tetramethylpiperidin-4-yl) adipate
13) di(2,2,6,6-tetramethylpiperidin-4-yl) sebacate
14) di(1,2,2,6,6-pentamethylpiperidin-4-yl) sebacate
14a) a mixture comprising 20% b.w. of (1,2,2,6,6-pentamethylpiperidin-4-yl) (methyl) sebacate and 80% by weight
   of di(1,2,2,6,6-pentamethylpiperidin-4-yl)-sebacate
15) di(1,2,3,6-tetramethyl-2,6-diethyl-piperidin-4-yl) sebacate
16) di(1-allyl-2,2,6,6-tetramethylpiperidin-4-yl) phthalate
17) 1-hydroxy-4-cyanoethoxy-2,2,6,6-tetramethylpiperidine
18) 1-acetyl-2,2,6,6-tetramethylpiperidin-4-yl acetate
19) tri(2,2,6,6-tetramethylpiperidin-4-yl) trimellitate
20) 1-acryloyl-4-benzyloxy-2,2,6,6-tetramethylpiperidine
21) di(2,2,6,6-tetramethylpiperidin-4-yl) diethylmalonate
22) di(1,2,2,6,6-pentamethylpiperidin-4-yl) dibutylmalonate
23) di(1,2,2,6,6-pentamethylpiperidin-4-yl) butyl(3,5-di-tert-butyl-4-hydroxybenzyl) malonate
24) di(1-octyloxy-2,2,6,6-tetramethylpiperidin-4-yl) sebacate
25) di(1-cyclohexyloxy-2,2,6,6-tetramethylpiperidin-4-yl) sebacate
26) hexane-1',6'-bis(4-carbamoyloxy-1-n-butyl-2,2,6,6-tetramethylpiperidine)
27) toluene-2',4'-bis-(4-carbamoyloxy-1-n-propyl-2,2,6,6-tetramethylpiperidine)
28) dimethylbis(2,2,6,6-tetramethylpiperidin-4-oxy)silane
29) phenyltris(2,2,6,6-tetramethylpiperidin-4-oxy)silane
30) tris(1-propyl-2,2,6,6-tetramethylpiperidin-4-yl) phosphite
30-a) tris(1-methyl-2,2,6,6-tetramethylpiperidin-4-yl) phosphite
31) tris(1-propyl-2,2,6,6-tetramethylpiperidin-4-yl) phosphate
32) phenyl bis(1,2,2,6,6-pentamethylpiperidin-4-yl) phosphonate
33) 4-hydroxy-1,2,2,6,6-pentamethylpiperidine
34) 4-hydroxy-N-hydroxyethyl-2,2,6,6-tetramethylpiperidine
35) 4-hydroxy-N-(2-hydroxypropyl)-2,2,6,6-tetramethylpiperidine
36) 1-glycidyl-4-hydroxy-2,2,6,6-tetramethylpiperidine
36-a-1) 1,2,3,4-tetrakis[2,2,6,6-tetramethylpiperidin-4-yloxycarbonyl]butane
36-a-2) bis[2,2,6,6-tetramethylpiperidin-4-yloxycarbonyl]- bis[tridecyloxycarbonyl]butane
36-b-1) 1 ,2,3,4-tetrakis[12,2,6,6-pentamethylpiperidin-4-yloxycarbonyl]butane
36-b-2) bis[1,2,2,6,6-pentamethylpiperidin-4-yloxycarbonyl]-bis[tridecyloxycarbonyl]butane
36-c) 2,2,6,6-tetramethylpiperidin-4-yloxycarbonyl(C15-C17alkane)
36-d) 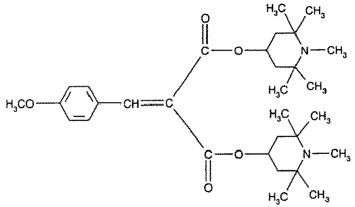
36-e) 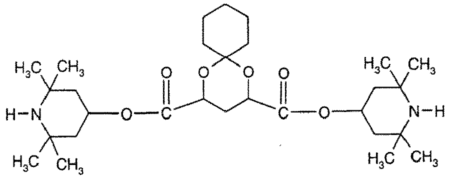
37) N,N'-bis(2,2,6,6-tetramethylpiperidin-4-yl)hexamethylene-1,6-diamine
38) N,N'-bis(2,2,6,6-tetramethylpiperidin-4-yl)hexamethylene-1,6-diacetamide
39) bis(2,2,6,6-tetramethylpiperidin-4-yl)amine
40) 4-benzoylamino-2,2,6,6-tetramethylpiperidine
41) N,N'-bis(2,2,6,6-tetramethylpiperidin-4-yl)-N,N'-dibutyladipamide
42) N,N'-bis(2,2,6,6-tetramethylpiperidin-4-yl)-N,N'-dicyclohexyl-2-hydroxypropylene-1,3-diamine
43) N,N'-bis(2,2,6,6-tetramethylpiperidin-4-yl)-p-xylylenediamine
44) N,N'-bis(2,2,6,6-tetramethylpiperidin-4-yl)succinamide
45) bis(2,2,6,6-tetramethylpiperidin-4-yl) N-(2,2,6,6-tetramethylpiperidin-4-yl)-α-aminodipropionate
46) 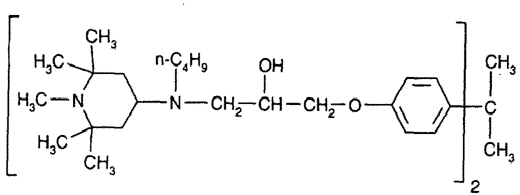
47) 4-(bis-2-hydroxyethylamino)-1,2,2,6,6-pentamethylpiperidine
48) 4-(3-methyl-4-hydroxy-5-tent-butyl-benzamido)-2,2,6,6-tetramethylpiperidine
49) 4-methacrylamido-1,2,2,6,6-pentamethylpiperidine
49-a-1) 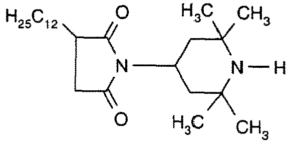
49-a-2) 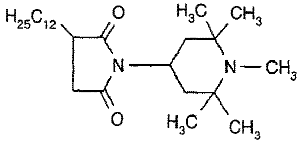
49-a-3) 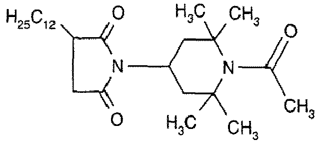
49-b) N,N',N"-tris[2,2,6,6-tetramethylpiperidin-4-ylamino(2-hydroxypropylene)]isocyanurate
49-c) 2-(2,2,6,6-tetramethylpiperidin-4-ylamino)-2-(2,2,6,6-tetramethylpiperidin-4-yl-aminocarbonyl)propane
49-d) 1,6-bis[N-(2,2,6,6-tetramethylpiperidin-4-yl)formylamino]hexane
49-e) 1-(2,2,6,6-tetramethylpiperidin-4-ylamino)-2-(2,2,6,6-tetramethylpiperidin-4-yl-aminocarbonyl)ethane
50) 9-aza-8,8,10,10-tetramethyl-1,5-dioxaspiro[5.5]undecane
51) 9-aza-8,8,10,10-tetramethyl-3-ethyl-1,5-dioxaspiro[5.5]undecane
52) 8-aza-2,7,7,8,9,9-hexamethyl-1,4-dioxaspiro[4.5]decane
53) 9-aza-3-hydroxymethyl-3-ethyl-8,8,9,10,10-pentamethyl-1,5-dioxaspiro[5.5]undecane
54) 9-aza-3-ethyl-3-acetoxymethyl-9-acetyl-8,8,10,10-tetramethyl-1,5-dioxaspiro[5.5]-undecane
55) 2,2,6,6-tetramethylpiperidine-4-spiro-2'-(1',3'-dioxane)-5'-spiro-5"-(1",3"-dioxane)-2"-spiro-4"'-(2"',2"',6"',6"'-tetramethylpiperidine)
56) 3-benzyl-1,3,8-triaza-7,7,9,9-tetramethylspiro[4.5]decane-2,4-dione
57) 3-n-octyl-1,3,8-triaza-7,7,9,9-tetramethylspiro[4.5]decane-2,4-dione
58) 3-allyl-1,3,8-triaza-1,7,7,9,9-pentamethylspiro[4.5]decane-2,4-dione
59) 3-glycidyl-1,3,8-triaza-7,7,8,9,9-pentamethylspiro[4.5]decane-2,4-dione
60) 1,3,7,7,8,9,9-heptamethyl-1,3,8-thazaspiro[4.5]decane-2,4-dione
61) 2-isopropyl-7,7,9,9-tetramethyl-1 -oxa-3,8-diaza-4-oxospiro[4.5]decane
62) 2,2-dibutyl-7,7,9,9-tetramethyl-1-oxa-3,8-diaza-4-oxospiro[4.5]decane
63) 2,2,4,4-tetramethyl-7-oxa-3,20-diaza-21-oxodispiro[5.1.11.2]heneicosane
64) 2-butyl-7,7,9,9-tetramethyl-1-oxa-4,8-diaza-3-oxospiro[4.5]decane
65) 8-acetyl-3-dodecyl-1,3,8-triaza-7,7,9,9-tetramethylspiro[4.5]decane-2,4-dione
66) 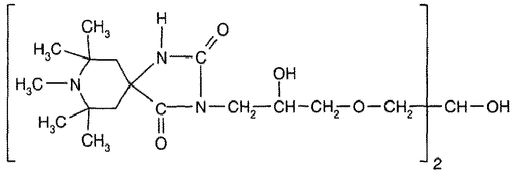
67) 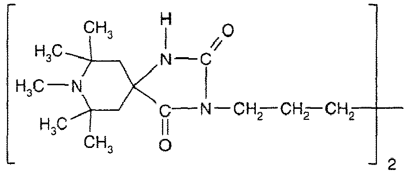
68) 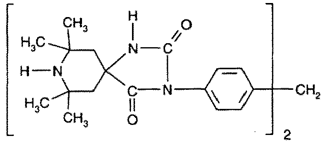
69-a) 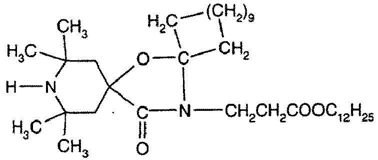
69-b) mixture of 60 % by weight of 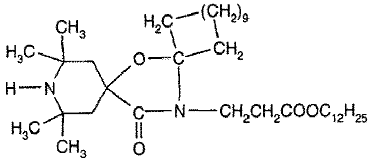
and 40 % by weight of 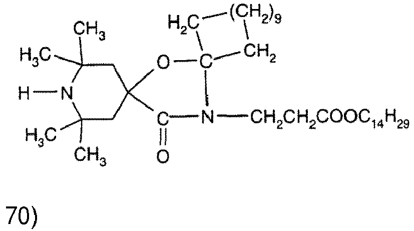 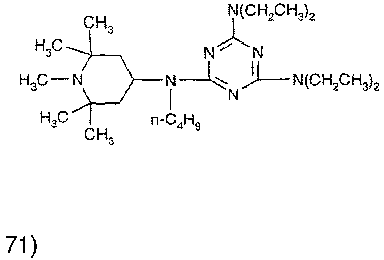 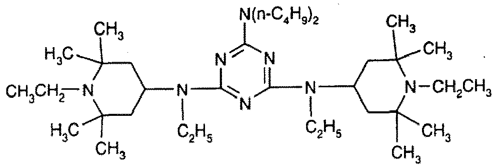
72) 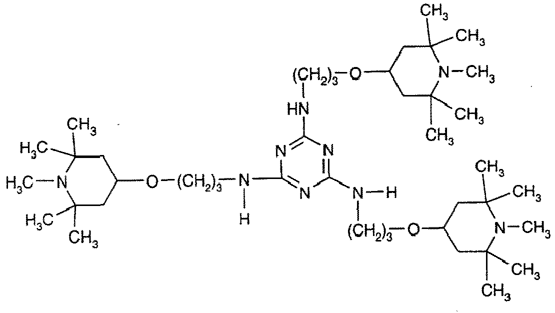
73) 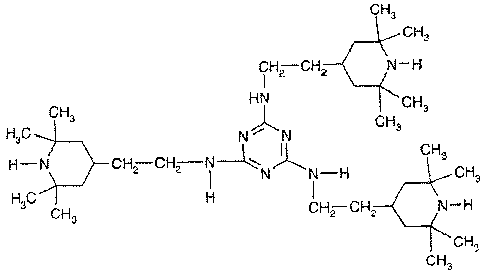
74) 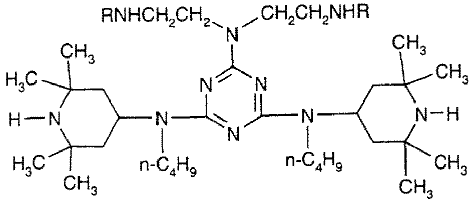 where R is 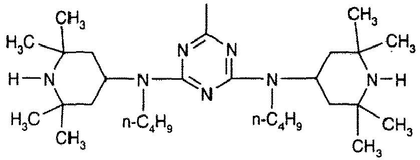
75) 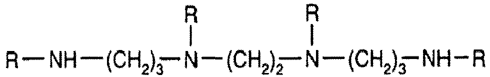 where R has the same meaning as in compound 74 76) 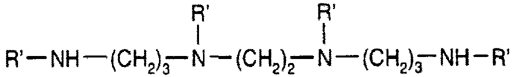 where R' is 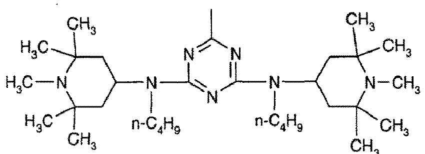
77) 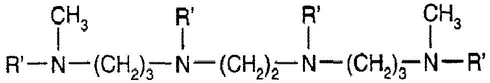 where R' has the same meaning as in compound (76)
78) 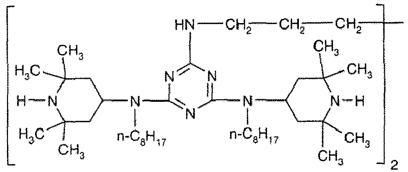
79) 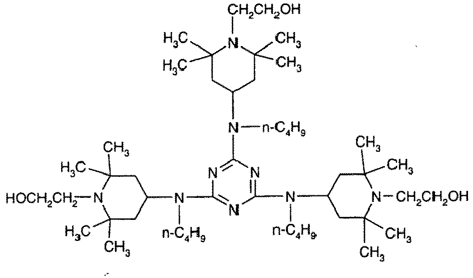
80) 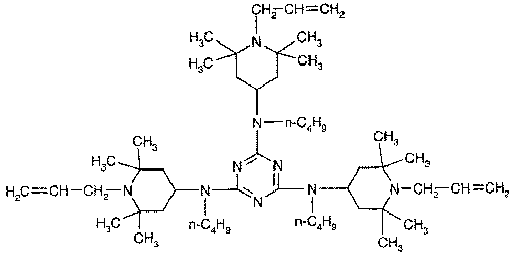
80-1) 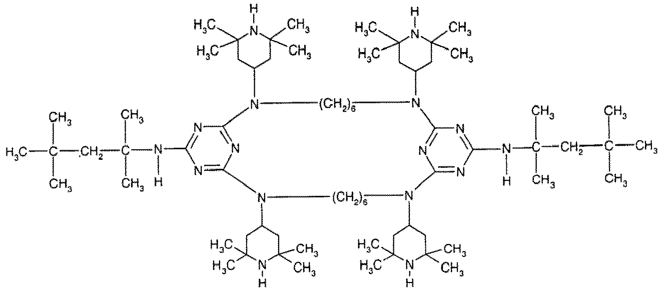
80-a)

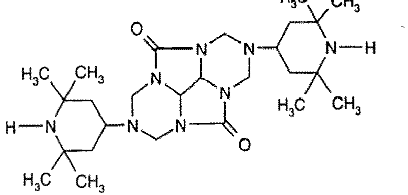

In the following compounds (81) to (83), (84-1), (84-2) and (85) to (91), (91-1), (92-1), (92-2), (93) and (94), m₁ to m₁₄ is a number from 2 to about 200, preferably 2 to 100, for example 2 to 50, 2 to 40 or 3 to 40 or 4 to 10.

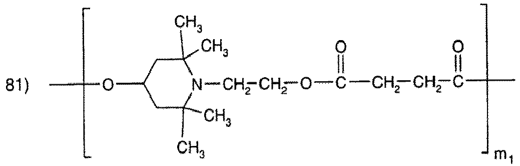

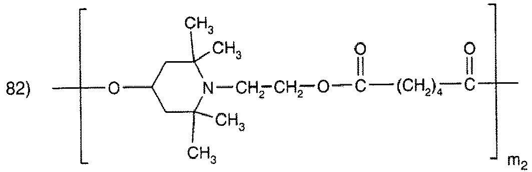

In the compounds (81) and (82), the end group bonded to the -O- can be, for example, hydrogen or a group -CO-(CH2)2-COO-Y or -CO-(CH2)4-COO-Y, respectively, with Y being hydrogen or C₁-C₄alkyl and the end group bonded to the diacyl can be, for example, -O-Y or a group

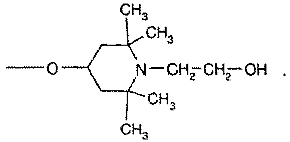

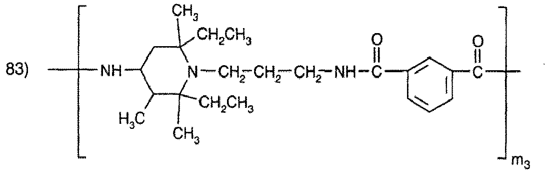

In the compound (83), the end group bonded to the amino residue can be, for example, a group 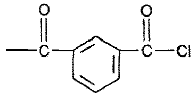 and the end group bonded to the diacyl residue can be, for example, Cl.

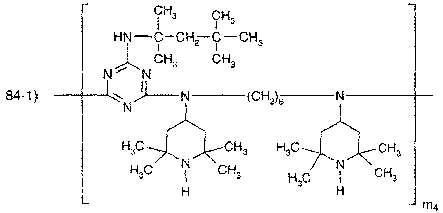

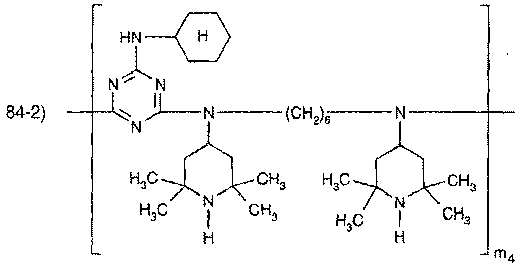

In the compounds (84-1) and (84-2), the end group bonded to the triazine residue can be, for example, chlorine or a group 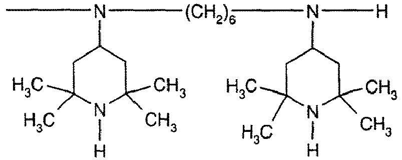 and the end group bonded to the diamino group can be, for example, hydrogen or a group

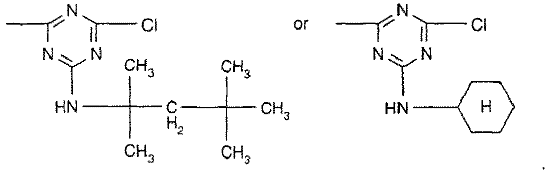

It may be convenient to replace the chlorine attached to the triazine by e.g. -OH or an amino group. Suitable amino groups are typically: pyrrolidin-1-yl, morpholino, -NH2, -N(C₁-C₈-alkyl)₂ and -NY'(C₁-C₈-alkyl) wherein Y' is hydrogen or a group of the formula

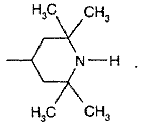

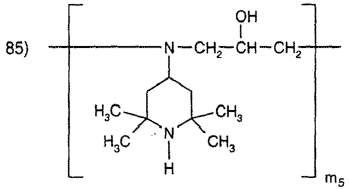

In the compound (85), the end group bonded to the 2,2,6,6-tetramethylpiperidin-4-ylamino residue can be, for example, hydrogen and the end group bonded to the 2-hydroxypropylene residue can be, for example,

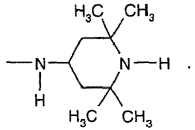

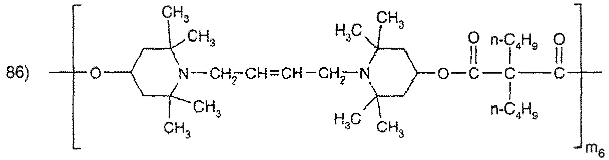

In the compound (86), the end group bonded to the -O- can be, for example, hydrogen or 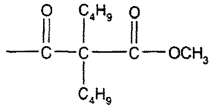 and the end group bonded to the diacyl residue can be, for example, -OCH3 or Cl.

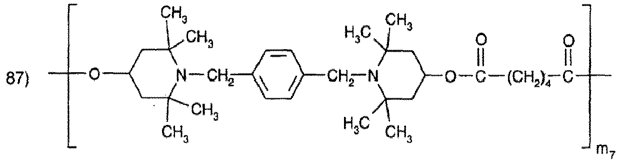

In the compound (87), the end group bonded to the -O- can be, for example, hydrogen or 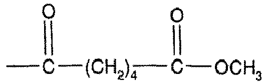 and the end group bonded to the diacyl radical can be, for example, -OCH3 or Cl.

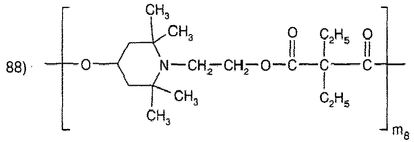

In the compound (88), the end group bonded to the -O- can be, for example, hydrogen or 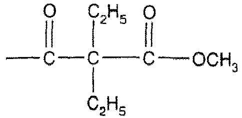 and the end group bonded to the diacyl radical can be, for example, -OCH3 or Cl.

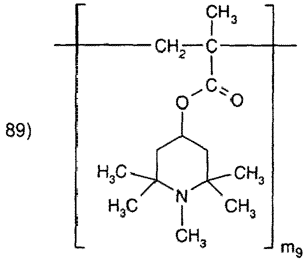

In the compound (89), the end group bonded to the -CH2- can be, for example, hydrogen and the end group bonded to the ester residue can be, for example,

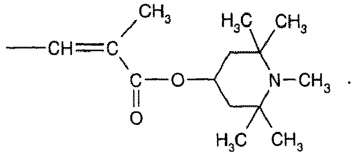

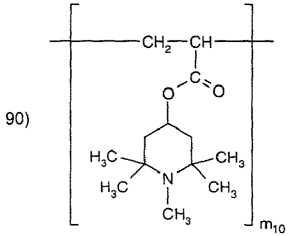

In the compound (90), the end group bonded to the -CH2- can be, for example, hydrogen and the end group bonded to the ester residue can be, for example,

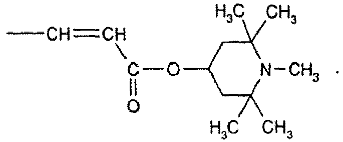

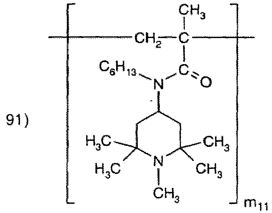

In the compound (91), the end group bonded to the -CH2- can be, for example, hydrogen and the end group bonded to the amide residue can be, for example, 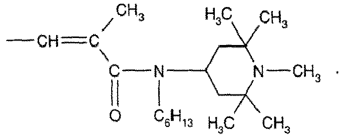 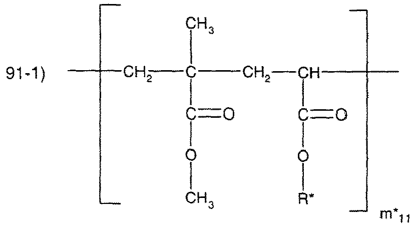 wherein m₁₁* is as defined for m₁₁, the radicals R* independently of one another are ethyl or 2,2,6,6-tetramethylpiperidin-4-yl, with the proviso that at least 50 % of the radicals R* are 2,2,6,6-tetramethylpiperidin-4-yl and the remaining radicals R* are ethyl. In the compound (91-1), the terminal groups are for example hydrogen.

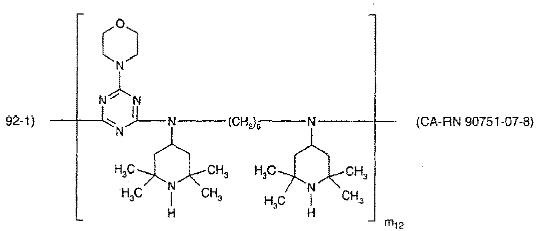

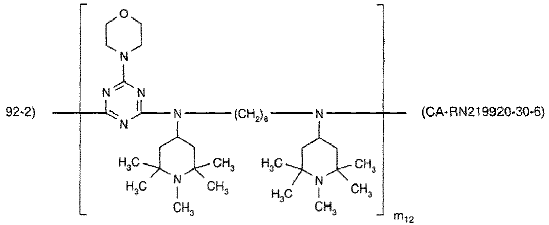

In the compounds (92-1) and (92-2), the end group bonded to the triazine residue can be, for example, chlorine or a group 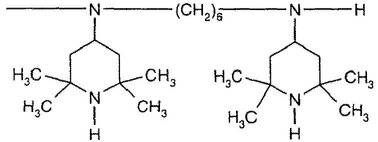 in the compound (92-1), and a group 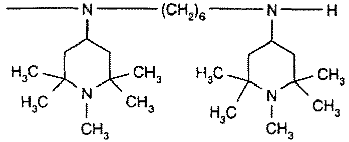 in the compound (92-2), and the end group bonded to the diamino residue can be, for example, hydrogen or a group

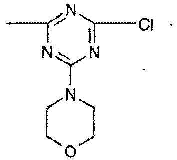

It may be convenient to replace the chlorine attached to the triazine by e.g. -OH or an amino group. Suitable amino groups are typically: pyrrolidin-1-yl, morpholino, -NH2, -N(C₁-C₈-alkyl)₂ and -NY'(C₁-C₈-alkyl) wherein Y' is hydrogen or a group of the formula

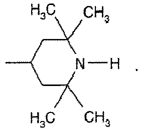

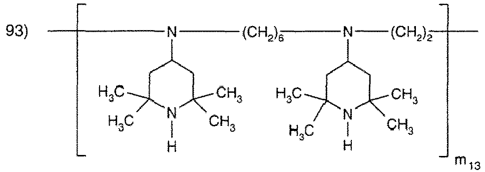

In the compound (93), the end group bonded to the diamino residue can be, for example, hydrogen and the end group bonded to the -CH2CH2- residue can be, for example,

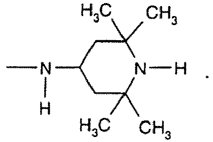

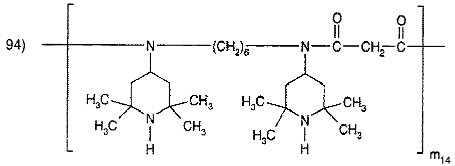

In the compound (94), the end group bonded to the diamino residue can be, for example, hydrogen and the end group bonded to the diacyl residue can be, for example, Cl. 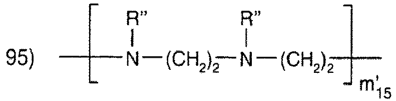 in which R" is a group of the formula 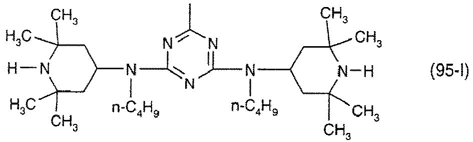 or the chain branching

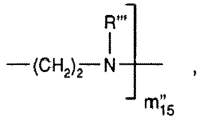

R'" is a group of the formula (95-1), and m'15 and m"15 are each a number from 0 to 200, preferably 0 to 100, in particular 0 to 50, with the proviso that m'15 + m"15 is a number from 2 to 200, preferably 2 to 100, in particular 2 to 50. In the compound 95, the end group bonded to the diamino residue can be, for example, hydrogen and the end group bonded to the -CH2CH2-group can be, for example, halogen, in particular Cl or Br.

96) the compound of the formula (96-I) or (96-II) 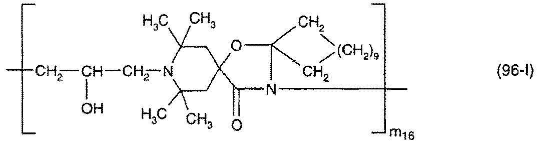 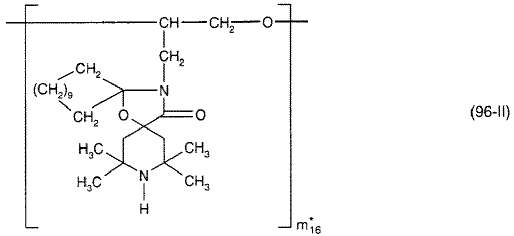 wherein m16 and m16* are a number from 2 to 50.

During the preparation, the compounds of the formulae (96-I) and (96-II) can be obtained together as a mixture and therefore, can also be employed as such. The (96-I):(96-II) ratio is, for example, from 20:1 to 1:20 or from 1:10 to 10:1.

In the compounds of the formula (96-I), the terminal group bonded to the nitrogen can be, for example, hydrogen and the terminal group bonded to the 2-hydroxypropylene radical can be, for example, a 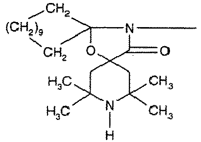 group.

In the compounds of the formula (96-II), the terminal group bonded to the dimethylene radical can be, for example, -OH, and the terminal group bonded to the oxygen can be, for example, hydrogen. The terminal groups can also be polyether radicals. 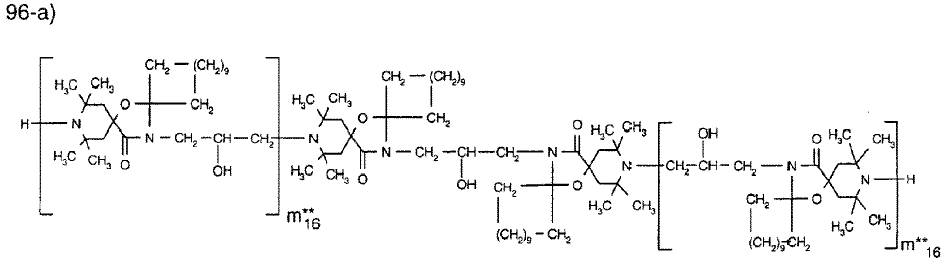 wherein the variables m16** are independently of one another as defined for m16.

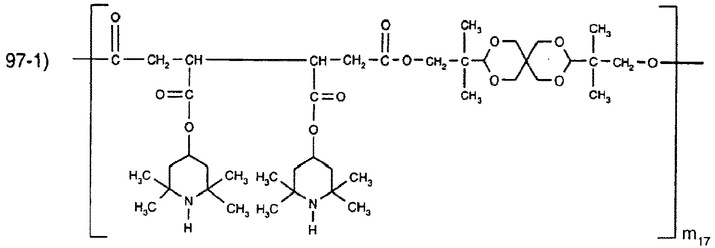

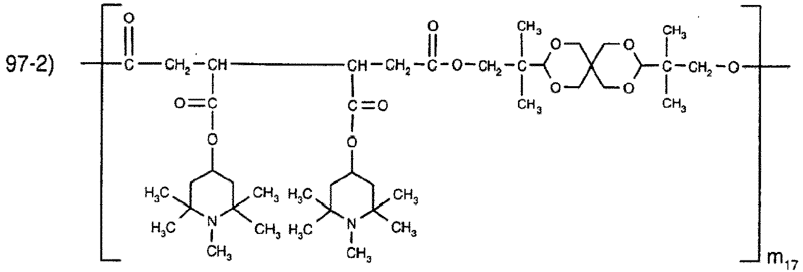

In the compounds (97-1) and (97-2) the mean value of m17 is 2.5 and the end group bonded to the >C=O group can be, for example, 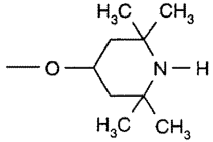 in the compound (97-1) and 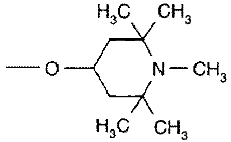 in the compound 97-2); and the end group bonded to the oxygen can be, for example 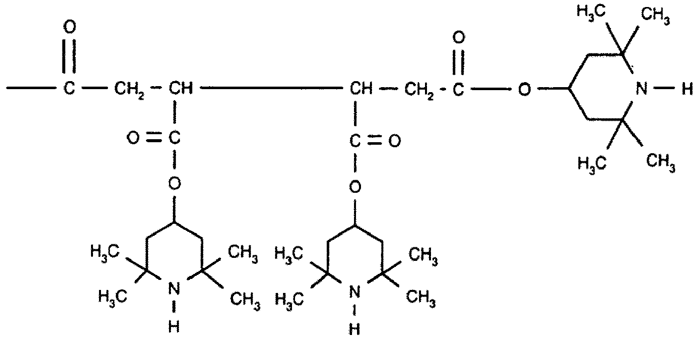 in compound (97-1) and 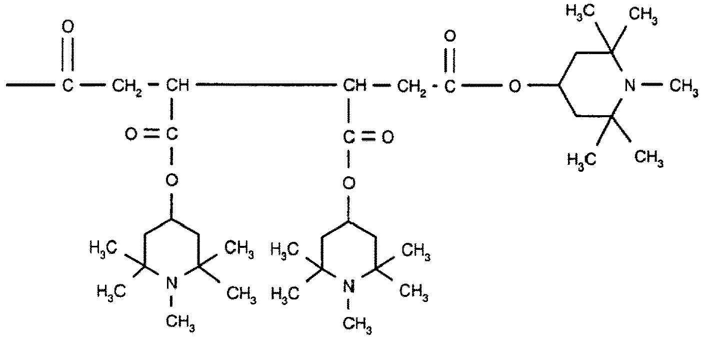 in compound 97-2). 98) 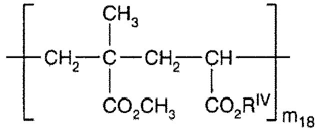 wherein approximately one third of the radicals RIV are -C2H5 and the others are a group 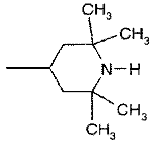 and m₁₈ is a number in the range from 2 to 200, preferably 2 to 100, in particular 2 to 50. In the compound (98), the end group bonded to the -CH2- residue can be, for example, hydrogen and the end group bonded to the -CH(CO₂R^{IV})- residue can be, for example, -CH=CH-COOR^{IV}.

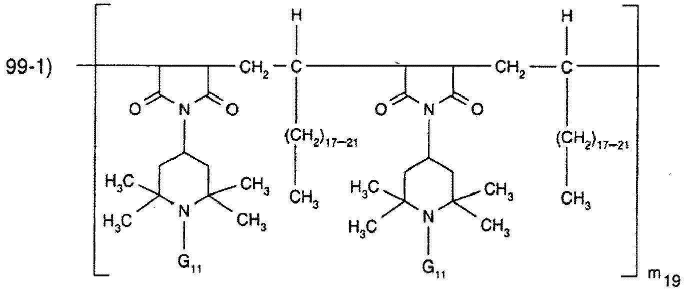

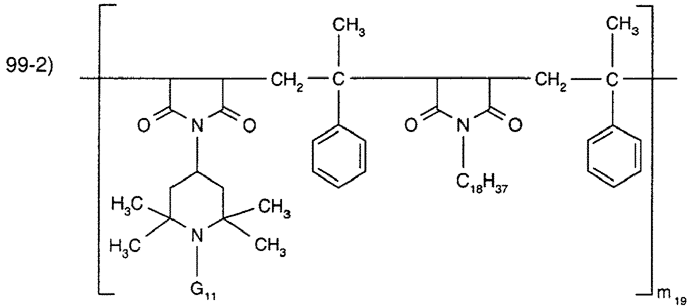

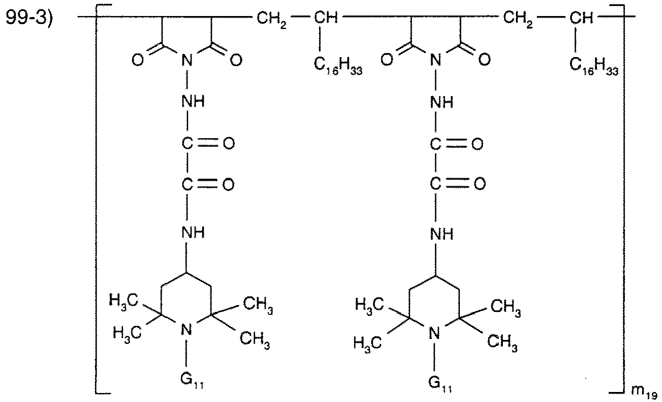

In the compounds (99-1), (99-2) and (99-3), G11 is hydrogen or methyl, and m19 is a number from 1 to 25.

In the compounds (99-1), (99-2) or (99-3), the end group bonded to the 2,5-dioxopyrrolidine ring can be, for example, hydrogen, and the other end group can be, for example, a group of the formula 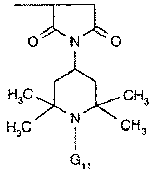 in the compounds (99-1) and (99-2), and
a group of the formula 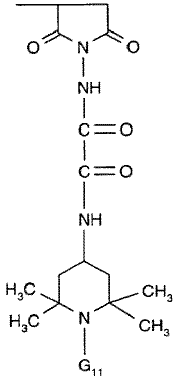 in compound (99-3).

100) A product obtainable by reacting a product, obtained by reaction of a polyamine of the formula (100a) with cyanuric chloride, with a compound of the formula (100b) 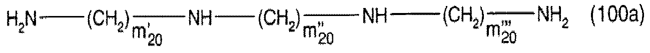 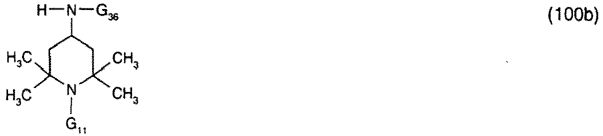 in which m'₂₀, m"₂₀ and m'"₂₀, independently of one another, are a number from 2 to 12, G₃₆ is hydrogen, C₁-C₁₂alkyl, C₅-C₁₂cycloalkyl, phenyl or C₇-C₉phenylalkyl, and G₁₁ is hydrogen or methyl. The product with G₁₁ being hydrogen has the Chemical Abstracts-CAS No. 136 504-96-6.

In general, the above reaction product can be represented for example by a compound of the formula (100-1), (100-2) or (100-3). It can also be in the form of a mixture of these three compounds.

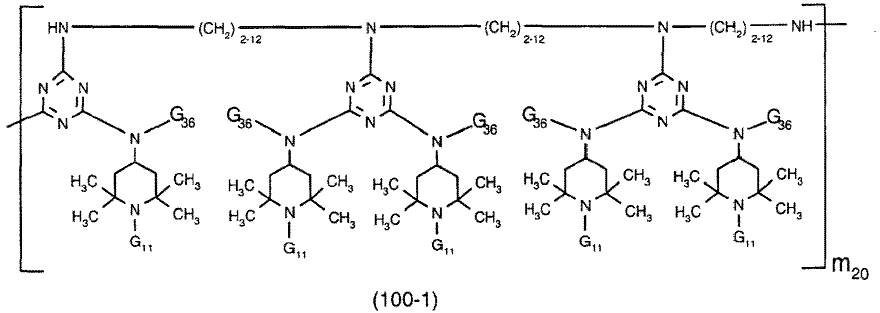

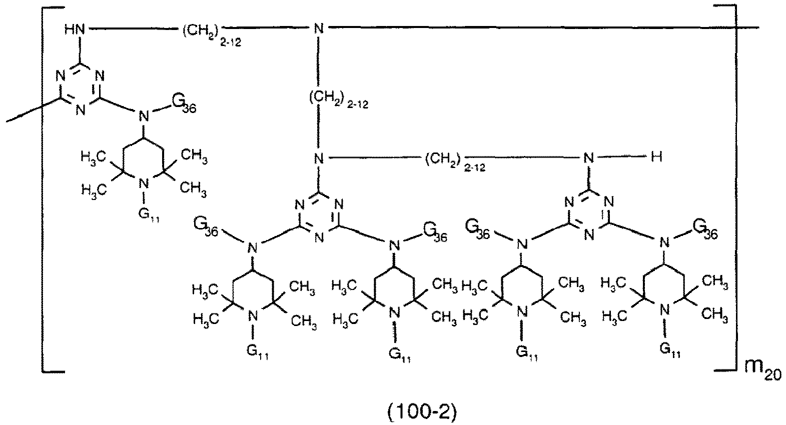

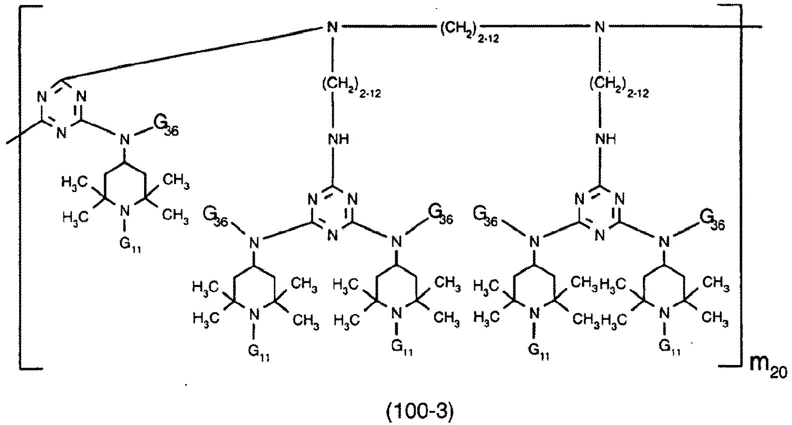

A preferred meaning of the formula (100-1) is

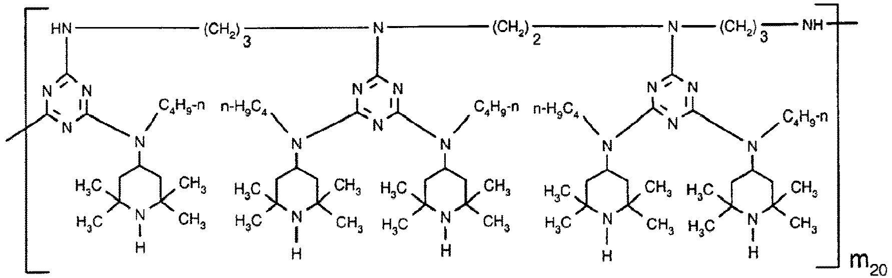

A preferred meaning of the formula (100-2) is

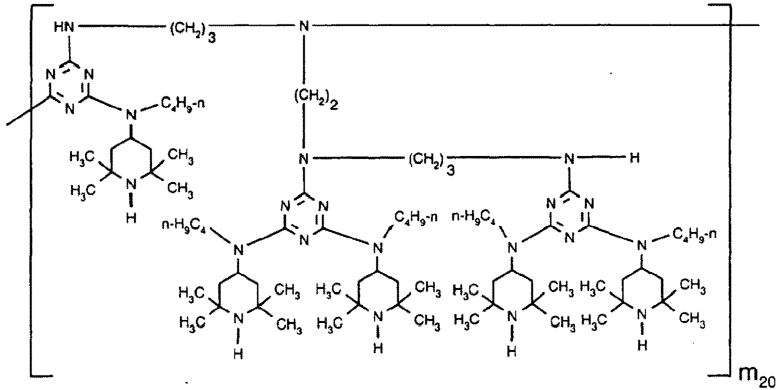

A preferred meaning of the formula (100-3) is

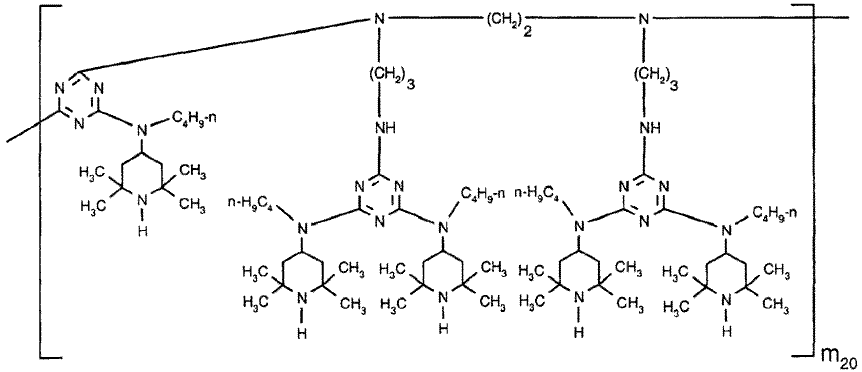

In the above formulae (100-1) to (100-3), m20 is e.g. 1 to 20, preferably 2 to 20. 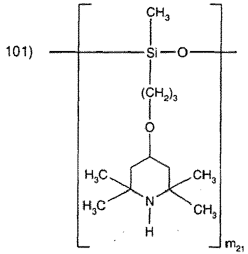 with m₂₁ being a number from 1 to 20.

In the compound (101), the terminal group bonded to the silicon atom can be, for example, (CH₃)₃Si-O-, and the terminal group bonded to the oxygen can be, for example, -Si(CH3)3. The compounds (101) can also be in the form of cyclic compounds if m₂₁ is a number from 3 to 10, i.e. the free valences shown in the structural formula then form a direct bond. 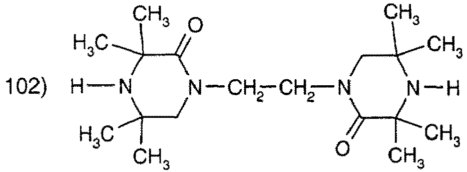 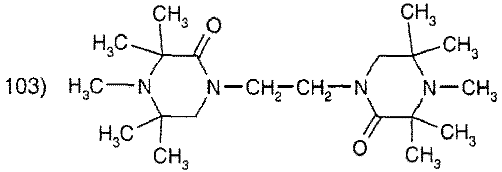 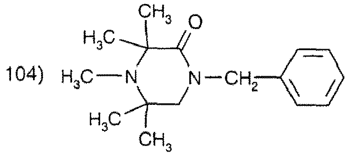 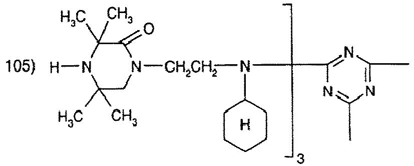 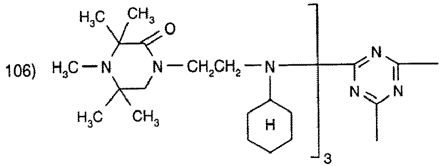 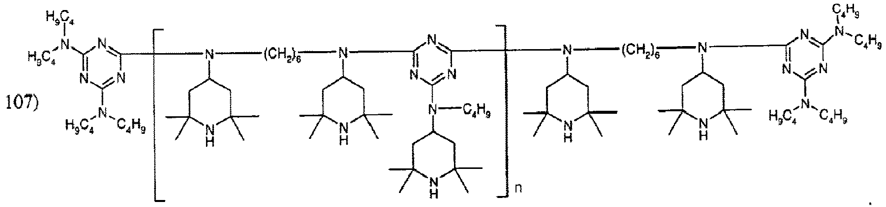 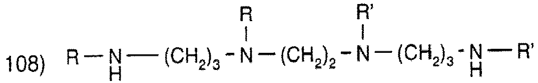 where R is 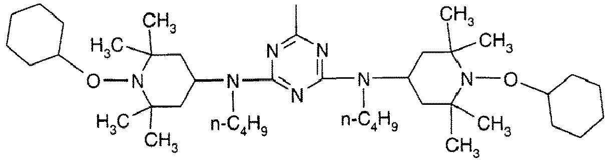 and one of the residues R' is R and the other is H;
109)

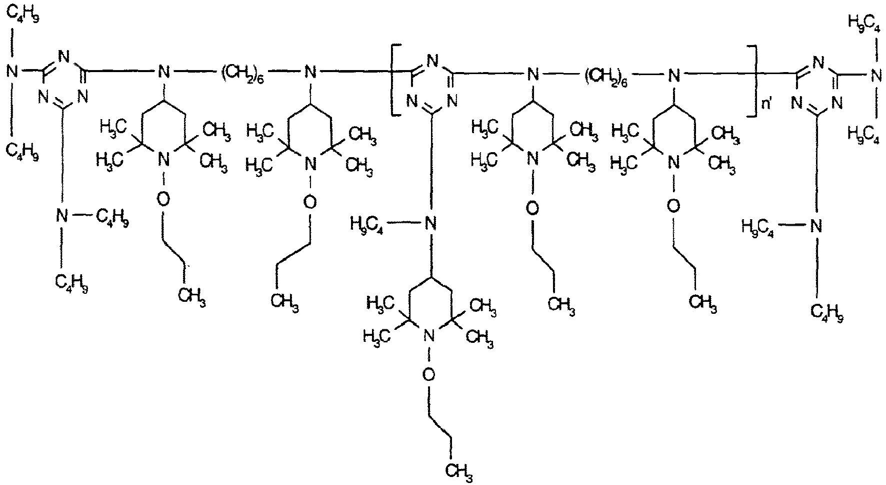

### 110) 5-(2-ethylhexanoyl)oxymethyl-3,3,5-trimethyl-2-morpholinone as disclosed in example A19 of US-A- 6140326;

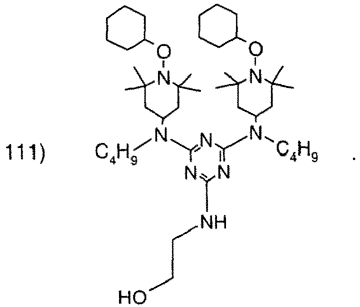

The sterically hindered amine of the above section can also be one of the compounds described in GB-A2,301,106 as component I-a), I-b), I-c), I-d), I-e), I-f), I-g), I-h), I-i), I-j), I-k) or I-l), in particular the light stabilizer 1-a-1, 1-a-2, 1-b-1, 1-c-1, 1-c-2, 1-d-1, 1-d-2, 1-d-3, 1-e-1, 1-f-1, 1-g-1, 1-g-2 or 1-k-1 listed on pages 68 to 73 of said GB-A- 2,301,106.

The sterically hindered amine of the above section may also be one of the compounds described in EP 782994, for example compounds as described in claims 10 or 38 or in Examples 1-12 or D-1 to D-5 therein.

Furthermore useful are sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethylpiperidine, bis(1-(2-hydroxy-2-methylpropoxy)-2,2,6,6-tetramethyl-piperidin-4-yl)sebacate, bis(1-(2-hydroxy-2-methylpropoxy)-2,2,6,6-tetramethylpiperidin-4-yl)adipate, bis(1-(2-hydroxy-2-methylpropoxy)-2,2,6,6-tetramethylpiperidin-4-yl)succinate, bis(1-(2-hydroxy-2-methylpropoxy)-2,2,6,6-tetramethylpiperidin-4-yl) glutarate and 2,4-bis{N-[1-(2-hydroxy-2-methylpropoxy)-2,2,6,6-tetramethylpiperidin-4-yl]-N-butylamino}-6-(2-hydroxyethylamino)-s-triazine.

### 112) 1-(2-hydroxy-2-methylpropoxy)-4-octadecanoyloxy-2,2,6,6-tetramethylpiperidine of formula

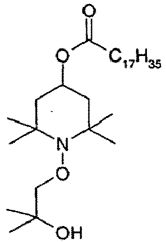

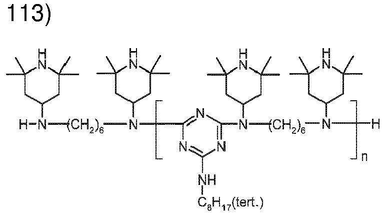

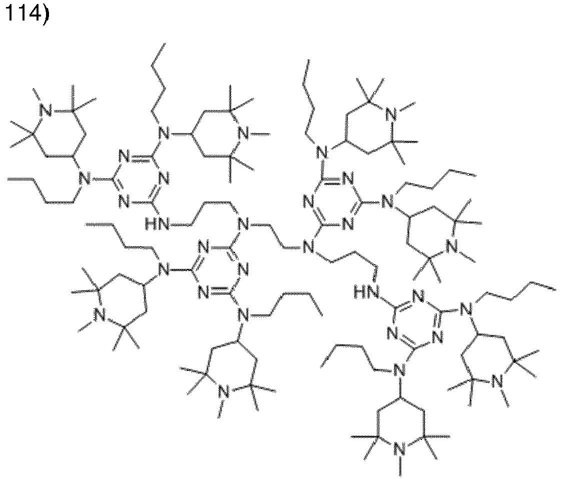

Preferred HALS compounds are compounds 13, 14a, 24, 76, 81, 84-1, 92-1, 92-2, 107, 108, 109, 110 and/or 112.

Preferred HALS compounds are 2,2,6,6-tetramethyl-4-piperidon; 2,2,6,6-tetramethyl-4-piperidinol; bis-(1,22,6,6-pentamethylpiperidyl)-(3',5'-di-tert-butyl-4'-hydroxy-benzyl)-butylmalonate; bis-(2,2,6,6-tetramethyl-4-piperidinyl)-decanedioate (Tinuvin® 770); bis-(2,2,6,6-tetramethyl-4-piperidinyl)-succinate (Tinuvin® 780); bis-(1-octyloxy-2,2,6,6-tetramethyl-4-piperidinyl)-sebacate (Tinuvin® 123); bis-(1,2,2,6,6-pentamethyl-4-piperidinyl)-sebacate (Tinuvin® 765); tetrakis-(2,2,6,6-tetramethyl-4-piperidyl)-1,2,3,4-butane-tetracarboxylaat; N,N'-bis-(2,2,6,6-tetramethyl-4-piperidyl)-hexane-1,6-diamine; N-butyl-2,2,6,6-tetramethyl-4-piperidinamine; 5-(2,2,6,6-tetramethyl-4-piperidinyl)-2-cyclo-undecyl-oxazole) (Hostavin® N20); 1,1'-(1,2-ethane-di-yl)-bis-(3,3',5,5'-tetramethylpiperazinone) (Goodrite® UV3034); 8-acetyl-3-dodecyl-7,7,9,9-tetramethyl-1,3,8-triazaspiro(4,5)decaan-2,4-dione (Tinuvin® 440); 1 ,2,3,4-butane-tetracarboxylic acid-1 ,2,3-tris(1 ,2,2,6,6-pentamethyl-4-piperidinyl)-4-tridecylester (Mark® LA62); N-2,2,6,6-tetrametyl-4-piperidinyl-N-amino-oxamide (Luchem® HAR100); 4-acryloyloxy-1,2,2,6,6-pentamethyl-4-piperidine; Mixture of esters from 2,2,6,6-tetramethyl-4-piperidinol and fatty acids (Cyasorb® UV3853); Propanedioicacid, [(4-methoxyphenyl)methylene]-,bis(1,2,2,6,6-pentamethyl-4-piperidinyl) ester (Sanduvor® PR 31); Formamide, N,N'-1,6-hexanediylbis[N-(2,2,6,6-tetramethyl-4-piperidinyl (Uvinul® 4050H); 1,5-Dioxaspiro (5,5) undecane 3,3-dicarboxylic acid, bis (2,2,6,6-tetramethyl-4-peridinyl) ester (Cyasorb® UV-500); 1,5-Dioxaspiro (5,5) undecane 3,3-dicarboxylic acid, bis (1,2,2,6,6-pentamethyl-4-peridinyl) ester (Cyasorb® UV516); 3-dodecyl-1-(2,2,6,6-tetramethyl-4-piperidyl)-pyrrolidin-2,5-dione (Cyasorb® UV3581) 3-dodecyl-1-(1,2,2,6,6-pentamethyl-4-piperidyl)-pyrrolidin-2,5-dione.

The most preferred HALS compounds are Bis-(2,2,6,6-tetramethyl-4-piperidyl)-sebacate, bis-(2,2,6,6-tetramethyl-4-piperidinyl)-decanedioate (Tinuvin® 770); compound 81 (Tinuvin 662), compound 113 (Chimassorb 994), compound 114 (Chimassorb 119).

In a further embodiment the mass ratio of the at least one Melamine based Mannich compound and the at least one HALS compound is between 1 : 99 and 99 : 1, preferably between 10 : 90 and 90 :10, more preferably between 20 : 80 and 80 : 20, even more preferably between 30 : 70 and 70 : 30.

It is furthermore preferred if the composition for use in a thermoplastic polymer comprises between 300 and 3000 ppm, preferably between 500 and 2000 ppm, more preferably between 1000 and 1500 ppm of the at least one HALS compound.

It is also preferred if the composition for use in a thermoplastic polymer comprises between 200 and 3000 ppm, preferably between 400 and 2000 ppm, more preferably 500 and 1000 ppm of the at least one Melamine based Mannich compound.

For example the composition may comprise between 1000 and 1500 ppm of at least one HALS compound and between 500 and 1000 ppm of the at least one Melamine based Mannich compound.

In a more preferred embodiment the composition for use as heat stabilizer in a thermoplastic polymer comprises 1000 ppm of at least one HALS compound and 500 ppm of at least one Melamine based Mannich compound. For example the composition may comprise 1000 ppm of the HALS compound Bis-(2,2,6,6-tetramethyl-4-piperidyl)-sebacate and 500 ppm of the Melamine based Mannich compound (20).

The thermoplastic polymer to be heat stabilized is preferably a polyolefin. Such polyolefins are for example:
- polymers of monoolefins and diolefins, for example polypropylene, polyisobutylene, polybut-1-ene, poly-4-methylpent-1-ene, polyisoprene or polybutadiene, as well as polymers of cycloolefins, for example of cyclopentene or norbomene; furthermore polyethylene (which optionally can be crosslinked); for example, high density polyethylene (HDPE), polyethylene of high density and high molar mass (HDPE-HMW), polyethylene of high density and ultrahigh molar mass (HDPE-UHMW), medium density polyethylene (HMDPE), low density polyethylene (LOPE), linear low density polyethylene (LLDPE), branched low density polyethylene (BLDPE).
- mixtures of the polymers mentioned above, for example mixtures of polypropylene with polyisobutylene, polyethylene with polyisobutylene, polypropylene with polyethylene (for example PP/HDPE/LDPE) and mixtures of different types of polyethylene (for example LDPE/HDPE) with one another.
- Copolymers of monoolefins and diolefins with each other or with other vinyl monomers, for example ethylene-propylene copolymers, linear low density polyethylene (LLDPE) and mixtures thereof with low density polyethylene (LDPE), propylene-but-1-ene copolymers, propylene-isobutylene copolymers, ethylene-but-1-ene copolymers, ethylene-hexene copolymers, ethylene-methylpentene copolymers, ethylene-heptene copolymers, ethylene-octene copolymers, propylene-butadiene copolymers, isobutylene-isoprene copolymers, ethylene-alkyl acrylate copolymers, ethylene-alkyl methacrylate copolymers, ethylene-vinyl acetate copolymers and their copolymers with carbon monoxide or ethylene-acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned under 1), for example polypropylene-ethylene-propylene copolymers, LDPE-ethylene-vinyl acetate copolymers, LDPE-ethylene-acrylic acid copolymers, LLDPE-ethylene-vinyl acetate copolymers, LLDPE-ethylene-acrylic acid copolymers and alternating or random polyalkylenecarbon monoxide copolymers and mixtures thereof with other polymers, for example polyamides.

Polyolefins, i.e. polymers of monoolefins exemplified in the preceding paragraphs, in particular polyethylene and polypropylene, can be prepared by various, and especially by the following, methods:
a) free-radical polymerization (normally under high pressure and at elevated temperature)
b) catalytic polymerization using a catalyst that normally contains one or more metals of group IVb, Vb, Vlb or VIII of the Periodic Table. These metals usually have one or more ligands, such as oxides, halides, alcoholates, esters, ethers, amines, alkyls, alkenyls and/or aryls that may be either p- or s-coordinated. These metal complexes may be in the free form or fixed on substrates, for example on activated magnesium chloride, titanium(III) chloride, alumina or silicon oxide. These catalysts may be soluble or insoluble in the polymerization medium. The catalysts can be active as such in the polymerization or further activators may be used, for example metal alkyls, metal hydrides, metal alkyl halides, metal alkyl oxides or metal alkyloxanes, the metals being elements of groups Ia, IIa and/or IIIa of the Periodic Table. The activators may be modified, for example, with further ester, ether, amine or silyl ether groups. These catalyst systems are usually termed Phillips, Standard Oil Indiana, Ziegler-Natta, TNZ (DuPont), metallocene or single site catalysts (SSC).

In a preferred case the polyolefin is selected from polyethylen, polypropylen, high pressure polyethylene or copolymers thereof.

The present invention, consequently, relates to a method of stabilizing a thermoplastic polymer, in particular a polyolefin against thermal degradation (thermo-oxidative degradation) by incorporating an amount of the composition of at least one HALS and at least one melamine based Mannich compound as defined above.

In addition, the present invention also relates to a polymer composition comprising thermoplastic polymer, in particular a polyolefin and a heat stabilizing stabilizing composition as defined above.

The heat stabilizing composition may be present in the polymer composition in a range between 300 and 10,000 ppm, preferably between 500 and 5000 ppm, more preferably between 1000 and 2000 ppm.

Depending upon their ultimate end use, the triazine based compounds of the formula (I) or mixtures therefrom of the present invention may be combined with a variety of additives conventionally employed in the antioxidant and/or UV stabilizing art, such as (further) antioxidants, (further) UV absorbers and stabilizers, metal deactivators, antistatics, phosphites and phosphonites, hydroxylamines, nitrones, co-stabilizers, nucleating agents, fillers and reinforcing agents, plasticizers, lubricants, emulsifiers, pigments, rheological additives, catalysts, level agents, optical brighteners, flameproofing agents, anti-static agents and blowing agents.

The heat stabilizing composition according to the present invention optionally in combination with a further stabilizer or additive may be added to the polyolefin to be stabilized individually or mixed with one another. If desired, the individual components of such a stabilizer mixture can be mixed with one another in the melt (melt blending) before incorporation into the polyolefin to be stabilized.

The incorporation of the triazine based compound of the invention and optional further components into the polyolefin is carried out by known methods such as dry blending in the form of a powder, or wet mixing in the form of solutions, dispersions or suspensions for example in an inert solvent, water or oil. The triazine based compounds of the invention and optional further additives may be incorporated, for example, before or after moulding or also by applying the dissolved or dispersed additive or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen.

The addition of the additive or additive blend to the polymer can be carried out in all customary mixing machines in which the polymer is melted and mixed with the additives. Suitable machines are known to those skilled in the art. They are predominantly mixers, kneaders and extruders.

The process is preferably carried out in an extruder by introducing the additive during processing. Particularly preferred processing machines are single-screw extruders, contrarotating and corotating twinscrew extruders, planetary-gear extruders, ring extruders or cokneaders. It is also possible to use processing machines provided with at least one gas removal compartment to which a vacuum can be applied. Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7*).* For example, the screw length is 1 - 60 screw diameters, preferably 35-48 screw diameters. The rotational speed of the screw is preferably 10 - 600 rotations per minute (rpm), very particularly preferably 25 - 300 rpm. The maximum throughput is dependent on the screw diameter, the rotational speed and the driving force. The process of the present invention can also be carried out at a level lower than maximum throughput by varying the parameters mentioned or employing weighing machines delivering dosage amounts. If a plurality of components is added, these can be premixed or added individually.

The heat stabilizing composition of the invention and optional further additives can also be added to the polymer in the form of a masterbatch ("concentrate") which contains the components in a concentration of, for example, about 1 % to about 40% and preferably 2 % to about 20 % by weight incorporated in a polymer. The polymer need not be necessarily of identical structure than the polymer where the additives are added finally. In such operations, the polymer can be used in the form of powder, granules, solutions, suspensions or in the form of latices.

Incorporation can take place prior to or during the shaping operation, or by applying the dissolved or dispersed compound to the polymer, with or without subsequent evaporation of the solvent. In the case of elastomers, these can also be stabilized as latices. A further possibility for incorporating the additives of the invention into polymers is to add them before, during or directly after the polymerization of the corresponding monomers or prior to crosslinking. In this context the additive of the invention can be added as it is or else in encapsulated form (for example in waxes, oils or polymers).

The polymer compositions, in particular the polyolefin compositions, containing the heat stabilizing composition of the invention described herein can be used for the production of mouldings, rotomoulded articles, injection moulded articles, blow moulded articles, pipes, films, tapes, mono-filaments, fibers, nonwovens, profiles, adhesives or putties, surface coatings and the like.

The invention is explained in more detail in the following examples by means of the figures. It shows:
- Figure 1: a diagram illustrating the long term thermal stability of a conventional heat stabilizing composition; and
- Figure 2: a diagram illustrating the long term thermal stability of a heat stabilizing composition according to the invention.

### Example 1: Synthesis of melamine based Mannich compound (20)

The synthesis starts by forming hexamethylolmelamine from melamine and formaldehyde. In the second step hexamethylolmelamine reacts with formaldehyde and 2,6-di-tert-butylphenol according to following reaction scheme:

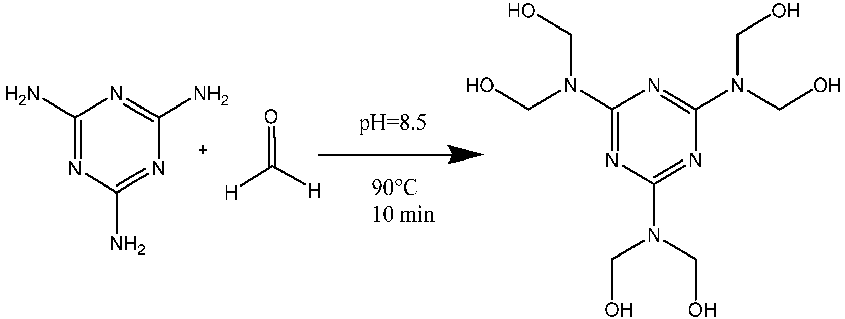

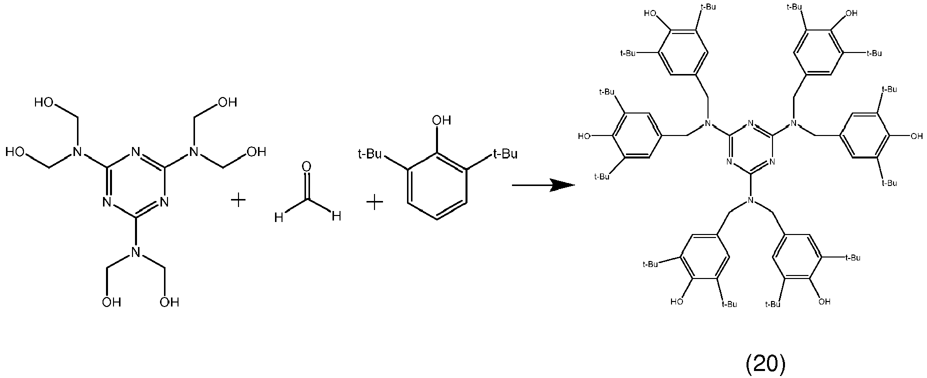

The synthesized compounds were characterized by NMR, FT-IR and HPLC-MS. Their thermal stability is determined by DSC and TGA.

### Example 2: LTTS Measurement

Desired amount of additive mix were compounded with HC101BC-powder on a TSE 15 twin screw extruder with melt temperature of 200°C and throughput of 4kg/h. The 0.5 mm specimen was done via compression moulding according to ISO 19069-2.

The thermal aging was done at 150°C in an air circulated oven. The time to embrittlement of the materials is reported as long term thermal stability (LTTS) in hours.

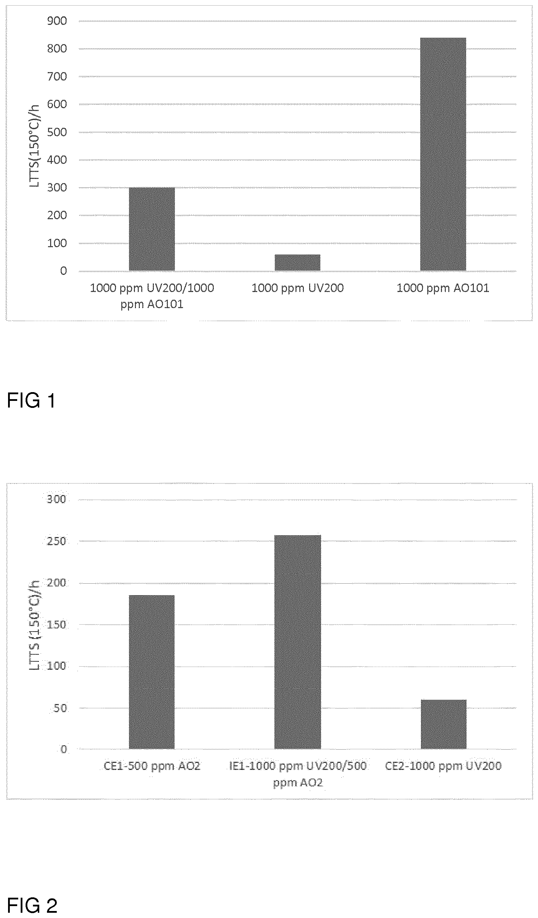

The diagram of Figure 1 illustrates the long term thermal stability of commercially available heat stabilizers.

1000 ppm of the antioxidant compound AO101 (Pentaerythrityl-tetrakis(3-(3',5'-di-tert. butyl-4-hydroxyphenyl)-propionate. trade name Irganox 1010) show a LTTS value of 840 (150°C) / h. 1000 ppm of the HALS compound UV200 (Bis-(2,2,6,6-tetramethyl-4-piperidyl)-sebacate, trade name Tinuvin 770) show a LTTS value of 60 (150°C) / h.

The combination of 1000 ppm AO101 and 1000 ppm UV200 shows a LTTS value of 300 (150°C) / h. Thus, the combination of AO101/UV200 provides a lower LTTS value than AO101 alone pointing to an undesirable antagonistic effect.

Figure 2 illustrates the long term thermal stability of heat stabilizer composition according to the invention.

500 ppm of melamine based compound (20) - here designated as AO2 - shows a LTTS value of 185 (150°C) / h.

The combination of 500 ppm AO2 and 1000 ppm UV200 shows a LTTS value of 257 (150°C) / h. Thus, the combination of AO2 / UV200 provides a higher LTTS value than AO2 and UV200; no antagonistic effect is seen. The LTTS value is more in line with an additive rule.

## Claims

1. Use of a composition comprising
a) at least one Melamine based Mannich compound of the formula (I) and/or their dimers or trimers and/or one or more precondensate therefrom of the formula (II) 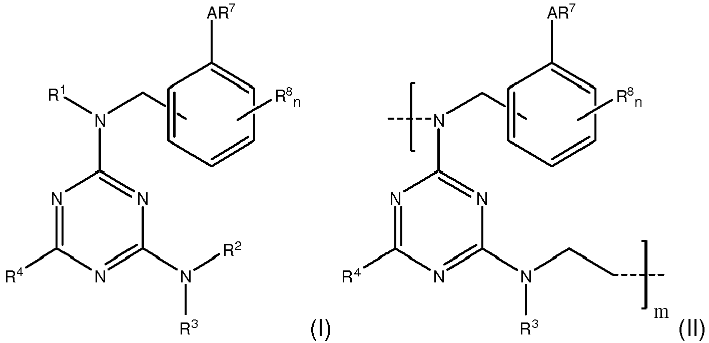 whereby
- **A** is O, N or S;
- **R⁴** is hydrogen, or Q¹, or a group **R⁵**-N-**R⁶** bonded with its central nitrogen atom to the triazine ring of structure (I) or (II);
- **R¹, R², R³, R⁵** and **R⁶** are hydrogen, or Q¹ or group of the formula (III) 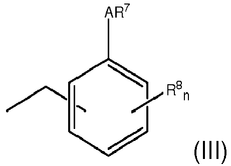
- **R⁷** is hydrogen, or Q¹, whereby in case of A being O or S R⁷ is present once, and in case of A being N R⁷ is present twice;
- **R⁸** is selected independently from each other and can be Q¹, or is selected from a group consisting of substituted or non-substituted hydroxy, substituted or non-substituted amino, halogen, or can be a group with the structure of (IV), whereby **R^{8'}** has the meaning of **R⁸** 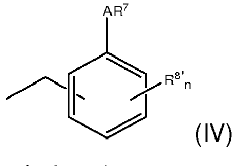
- **n** is 0 to 4,
- Q¹ is selected from a group consisting of substituted and non-substituted, linear or branched C₁-C₅₀-alkyl, substituted and non-substituted, linear or branched C₂-C₅₀-alkenyl, substituted and non-substituted, linear or branched C₂-C₅₀-alkinyl, substituted and non-substituted C₃-C₁₀-cycloalkyl, substituted and non-substituted C₅-C₇-cycloalkenyl, substituted and non-substituted C₆-C₂₀-aryl, which in each case can be interrupted by one or more atoms or groups selected from oxygen atoms, substituted or mono-substituted nitrogen atoms, double bonds, siloxan groups and/or by one or more groups of the type -C(O)O-, -OC(O)-, -C(O)-, -C(O)NH-, -NHC(O)O-,-OC(O)NH-, -NHC(O)NH- and/or -OC(O)O-, whereby in case of R⁴ the atoms and groups selected from oxygen atoms, -OC(O)-, -C(O)-, -NHC(O)O-, -NHC(O)NH- or-OC(O)O- can be directly connected to the triazine ring and in case of R⁷ the atoms and groups selected from -C(O)-, C(O)O- or -C(O)NH- can be directly connected to A and in case of R⁸ the groups selected from -OC(O)-, -C(O)-, -NHC(O)O-, -NHC(O)NH-,-C(O)O-, -C(O)NH- or -OC(O)O- can be directly connected to the aromatic ring,
- **m** is 2 to 20, and
b) at least one hindered amine light stabilizer (HALS),
as heat stabilizer, in particular long term heat stabilizer in thermoplastic polymer, preferably in polyolefins.

2. Use according to claim 1, wherein in the formula (I) and (II)
- **A** is O or N,
- **R⁴** is Q¹ being selected from substituted or non-substituted, linear or branched C₁-C₁₈-alkyl or substituted or non-substituted C₆-C₁₀-aryl, or a group **R⁵**-N-**R⁶** bonded with its central nitrogen atom to the triazine ring of structure (I) or (II),
- **R¹, R², R³, R⁵** and **R⁶** are selected from hydrogen, substituted or non-substituted, linear or branched C₁-C₁₈-alkyl, substituted or non-substituted C₃-C₇-cycloalkyl and substituted or non-substituted, linear or branched C₂-C₁₂-alkenyl or group of the formula (III) 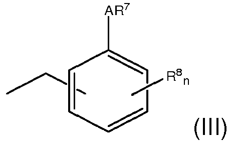
- **R⁷** is selected from hydrogen or C₁-C₁₂-alkyl which can be interrupted by one or more oxygen atoms, substituted or mono-substituted nitrogen atoms, and/or by one or more groups of the type -C(O)O-, -OC(O)- and -C(O)-, whereby the group -C(O)- can also be directly connected to A,
- **n** is 1 or 2, whereby the position of **n** is *ortho* to AR⁷,
- **R⁸** is from a group comprising -OH, -OCH3, -OC₂H₅, -NH_{2,} substituted or non-substituted, linear or branched C₁-C₁₂-Alkyl, substituted and non-substituted C₃-C₇-cycloalkyl and substituted and non-substituted, linear or branched C₂-C₁₂-alkenyl, substituted and non-substituted C₆-C₁₂ Aryl,
- **m** is 2 to 10.

3. Use according to one of the preceding claims, wherein the melamine based compound of the formula (I) consists of one of the following structures: 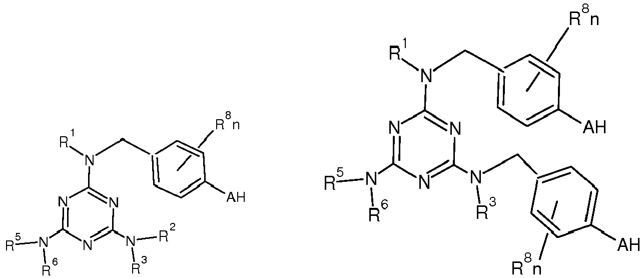 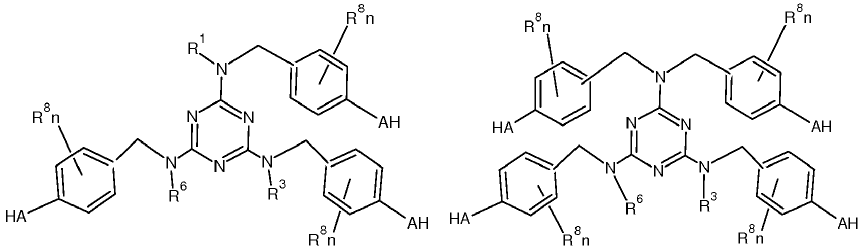 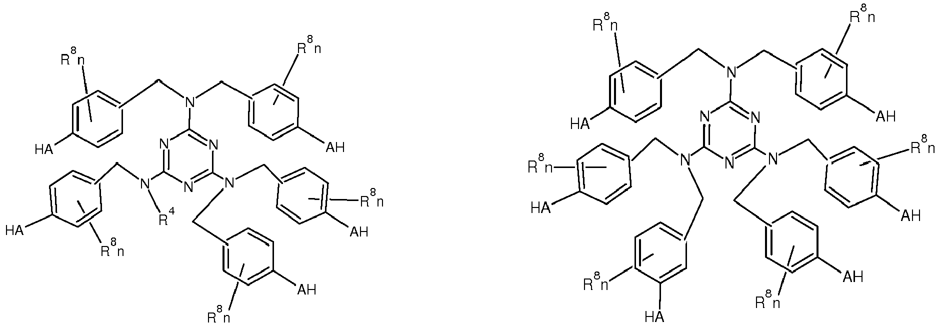 wherein R¹, R², R³, R⁵, R⁶, R⁸ have the above meaning and A is O.

4. Use according to one of the preceding claims, wherein the moieties R¹, R², R³, R⁵ and R⁶ can be selected from a group comprising H, substituted and non-substituted C₁-C₁₂-alkyl, substituted and non-substituted C₃-C₇-Cycloalkyl and substituted and non-substituted C₂-C₁₂-alkenyl, preferably H, methyl, ethyl, isopropyl or butyl.

5. Use according to one of the preceding claims, wherein the moiety R⁸ is selected from a group comprising substituted or non-substituted C₁-C₁₂-Alkyl, in particular methyl, ethyl, n-propyl, iso-propyl, n-butyl, tert-butyl, and n = 1 or 2, in particular 2.

6. Use according to one of the preceding claims, wherein the melamine based Mannich compounds of general formula (I) and (II) are selected from a group consisting of: 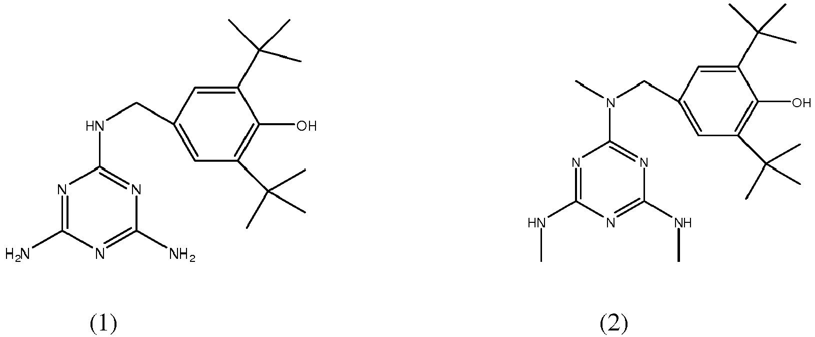 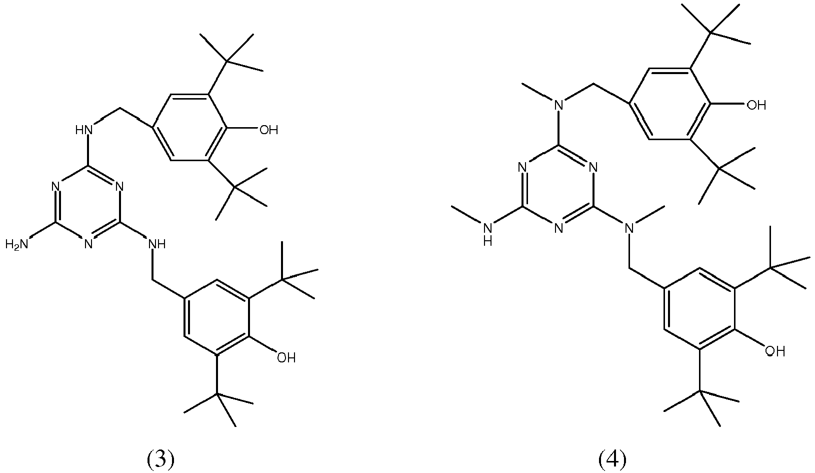 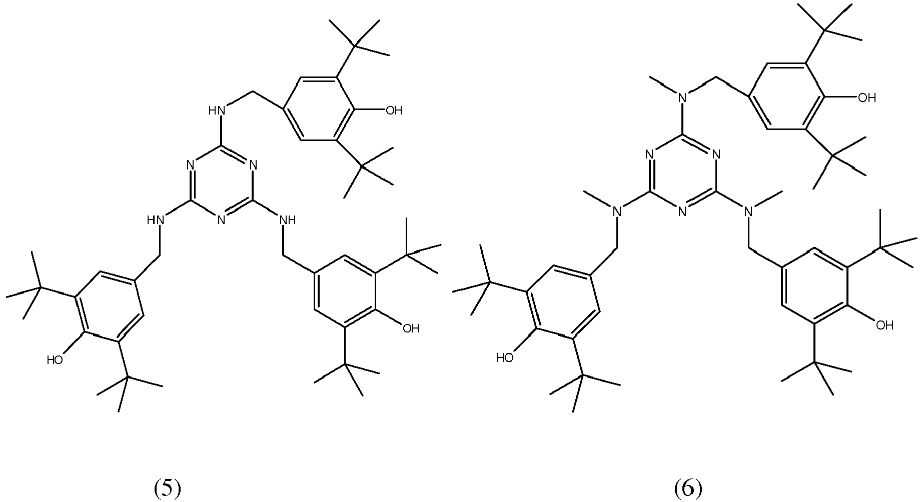 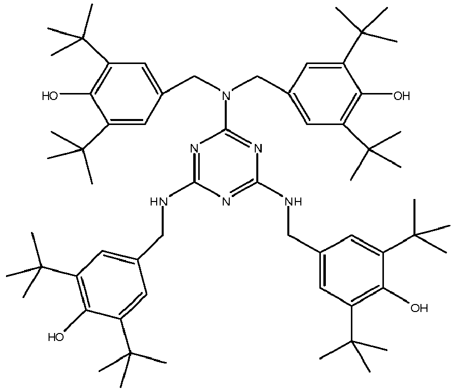 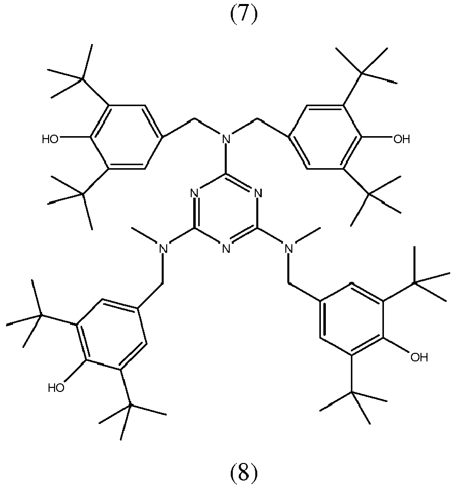 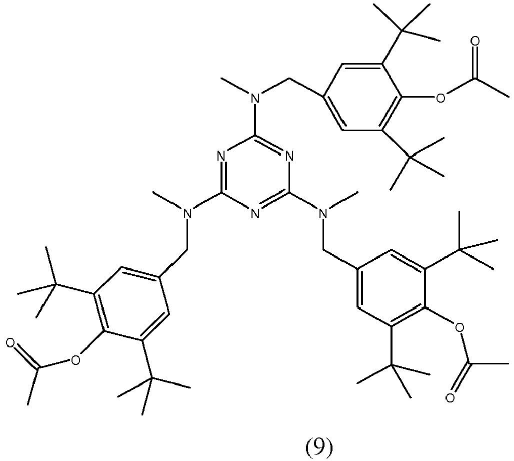 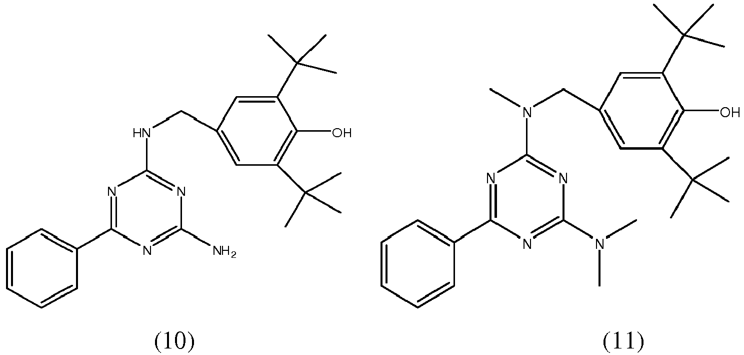 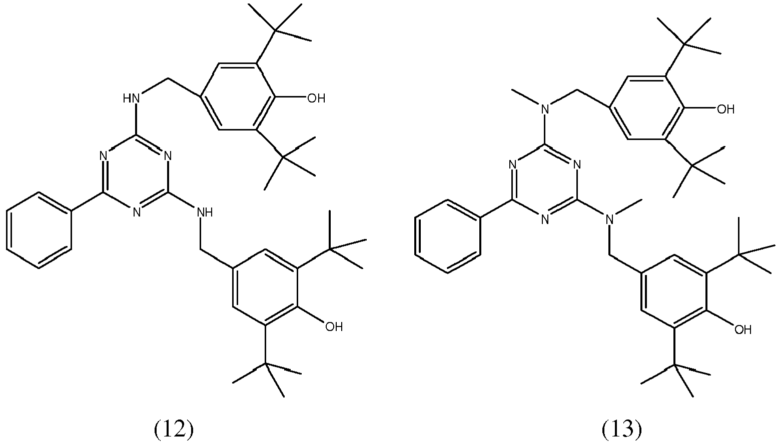 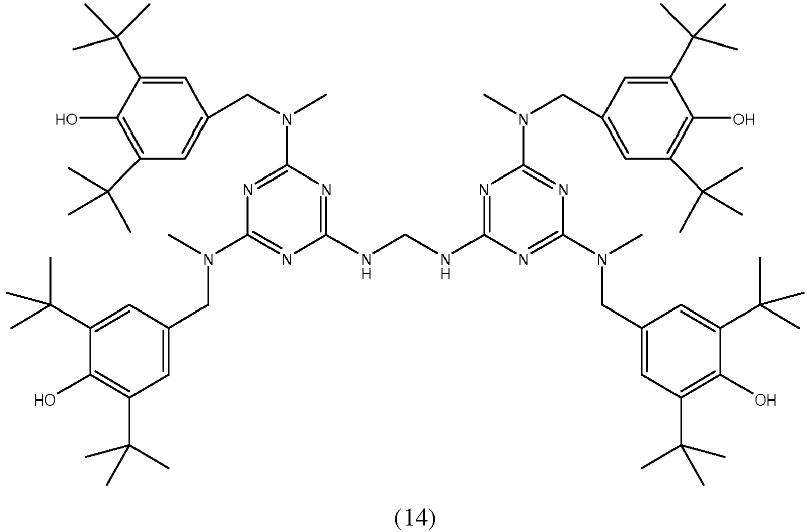 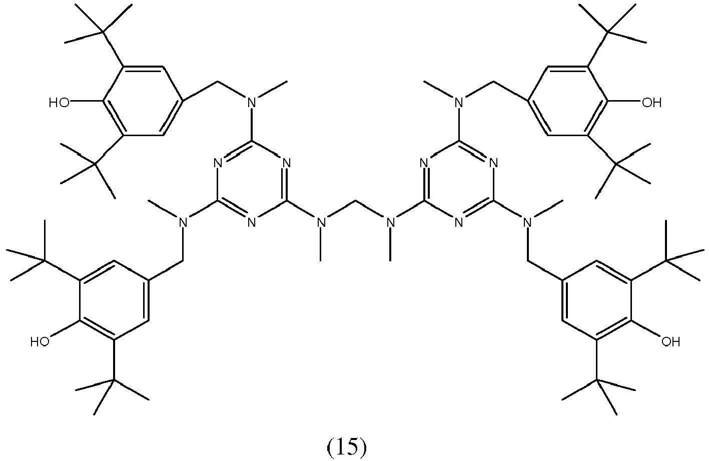 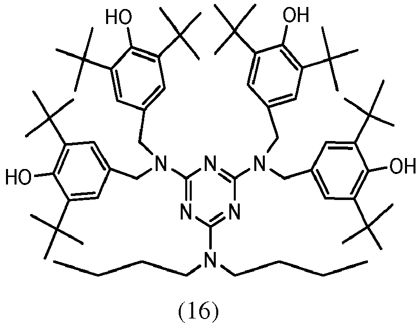 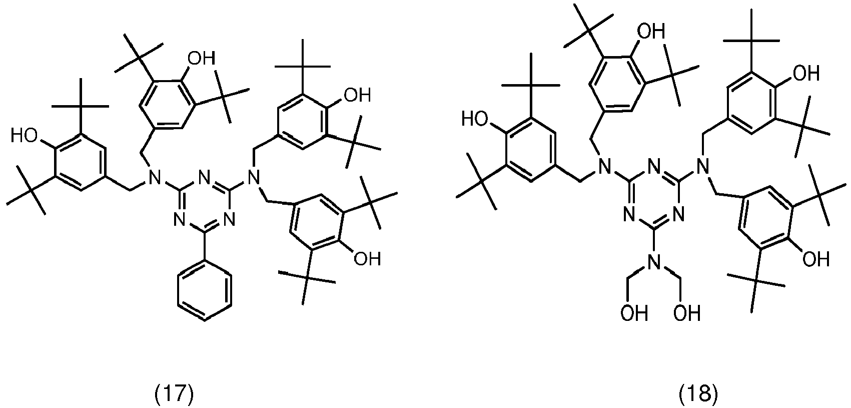 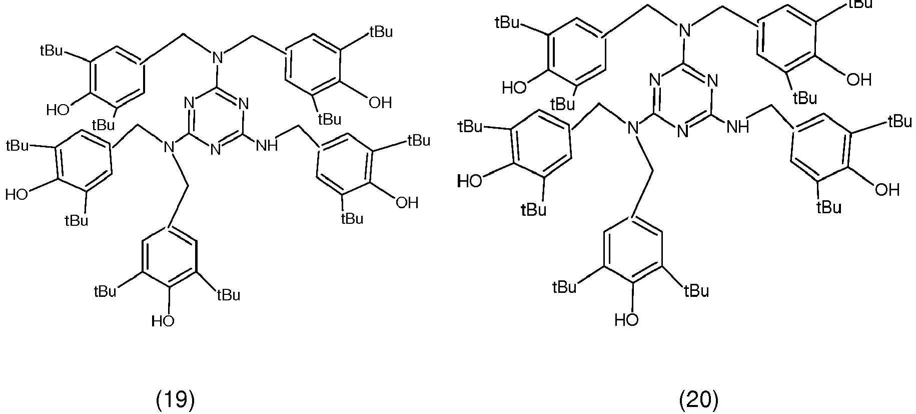 or mixtures thereof.

7. Use according to one of the preceding claims, wherein the melamine based Mannich compound according to formula (I) is selected from a group consisting of: 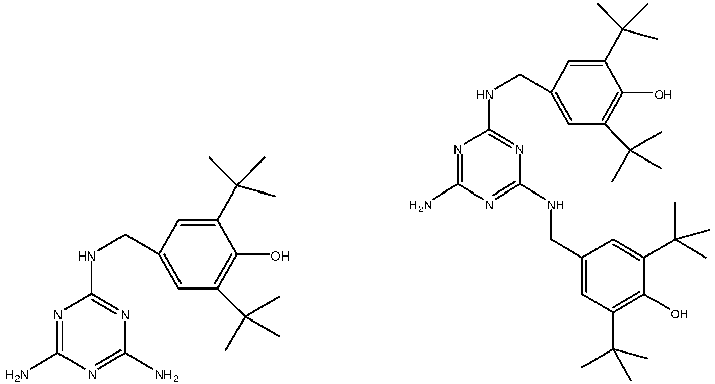 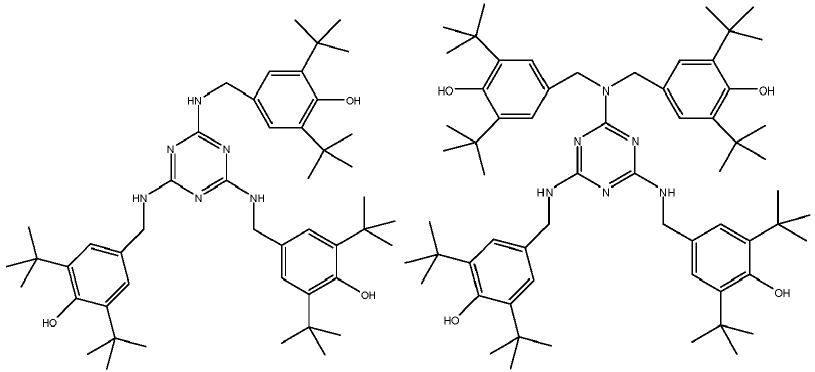 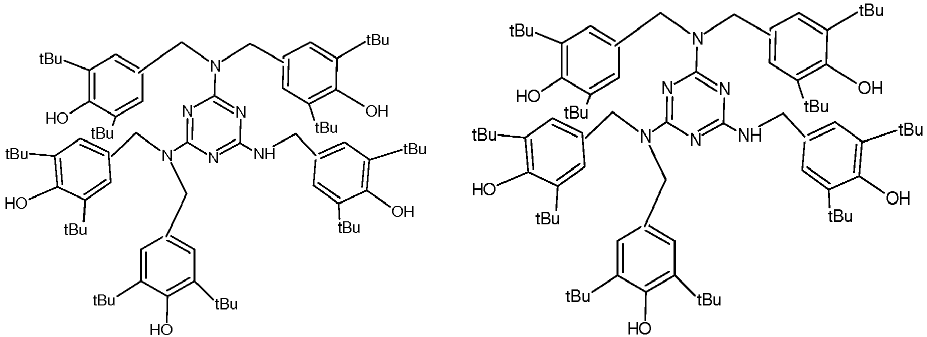 or a mixture thereof.

8. Use according to one of the preceding claims, wherein the at least one HALS compound comprises one, preferably two (2,2,6,6)-tetramethylpiperidine -4-yl moieties.

9. Use according to one of the preceding claims, wherein the mass ratio of the at least one Melamine based Mannich compound and the at least one HALS compound is between 1 : 99 and 99 : 1, preferably between 10 : 90 and 90 :10, more preferably between 20 : 80 and 80 : 20, even more preferably between 30 : 70 and 70 : 30.

10. Use according to one of the preceding claims, wherein the composition comprises between 300 and 3000 ppm, preferably between 500 and 2000 ppm, more preferably between 1000 and 1500 ppm of the at least one HALS compound.

11. Use according to one of the preceding claims, wherein the composition comprises between 200 and 3000 ppm, preferably between 400 and 2000 ppm, more preferably 500 and 1500 ppm of the at least one Melamine based Mannich compound.

12. Method of stabilizing a polymer against thermo-oxidative degradation by incorporating a composition as defined in one of the preceding claims into the thermoplastic polymer, in particular into a polyolefin.

13. Polymer composition comprising thermoplastic polymer, in particular a polyolefin and a heat stabilizing composition as defined in one of the claims 1-11.

14. Polymer composition according to claim 13 comprising the heat stabilizing composition in a range between 300 and 10,000 ppm, preferably between 500 and 5000 ppm, more preferably between 1000 and 2000 ppm.

15. Use of a polymer composition according to claim 13 or 14 for the production of mouldings, rotomoulded articles, injection moulded articles, blow moulded articles, pipes, films, tapes, mono-filaments, fibers, nonwovens, profiles, adhesives or putties, or surface coatings.
